(19) Europäisches Patentamt
European Patent Office
Office européen des brevets

(11) **EP 3 838 942 A1**

(12) **EUROPÄISCHE PATENTANMELDUNG**

(43) Veröffentlichungstag:
**23.06.2021 Patentblatt 2021/25**

(51) Int Cl.:
*C08G 18/08* (2006.01)   *C08G 18/10* (2006.01)
*C08G 18/32* (2006.01)   *C08G 18/73* (2006.01)

(21) Anmeldenummer: **19216835.9**

(22) Anmeldetag: **17.12.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude 4825
51365 Leverkusen (DE)**

(54) **VERFAHREN ZUR HERSTELLUNG VON POLYURETHANEN MIT HOHER REAKTIONSENTHALPIE**

(57)   Die Erfindung betrifft ein mehrstufiges Verfahren zur kontinuierlichen Herstellung von thermoplastischen Polyurethanen durch Umsetzung von einem oder mehreren aliphatischen, cycloaliphatischen und / oder araliphatischen Diolen mit einem oder mehreren aliphatischen, cycloaliphatischen und / oder araliphatischen Diisocyanaten, wobei die Gesamtreaktionsentalphie über alle Verfahrensstufen $\leq$ -500 kJ/kg beträgt, bei einem molaren Verhältnis von Diol zu Diisocyanat von 1,0 : 1,0.

EP 3 838 942 A1

**Beschreibung**

Die Erfindung betrifft ein mehrstufiges Verfahren zur kontinuierlichen, lösungsmittelfreien Herstellung von thermoplastischen Polyurethanen durch Umsetzung von einem oder mehreren Diolen mit ein oder mehrere Diisocyanaten, umfassend aliphatische, cycloaliphatische und / oder araliphatische Diisocyanate, wobei die Isocyanat-Komponente und die Diol-Komponente so ausgewählt werden, dass, wenn man sie in einem molaren Verhältnis von 1,0 : 1,0 umsetzt, die Gesamtreaktionsenthalpie über alle Verfahrensstufen von -900 kJ/kg bis -500 kJ/kg beträgt, bestimmt gemäß DIN 51007:1994-06.

Polyurethane und insbesondere thermoplastische Polyurethane werden aufgrund ihrer hervorragenden physikalischen Eigenschaften seit Jahren für die unterschiedlichsten Einsatzzwecke verwendet. Trotz der breiten Verwendbarkeit von Polyurethanen gibt es Anwendungsbereiche, in denen andere Kunststoffe, wie beispielsweise Polyamid-Kunststoffe, verwendet werden, weil keine Polyurethane mit geeigneten physikalischen Eigenschaften verfügbar sind oder diese nur schwer bereitgestellt werden können.

Polyurethane, die aus kurzkettigen aliphatischen Diolen und aliphatischen Polyisocyanaten aufgebaut sind, weisen vergleichbare oder bessere Eigenschaften zu den Polyamid-Kunststoffen auf. Sie lassen sich bis jetzt aber nicht zufriedenstellend im industriellen Maßstab herstellen, da entscheidende verfahrenstechnische Probleme bislang nicht gelöst werden konnten. Aufgrund der hohen Dichte an reaktiven Gruppen, weist die Polyaddition von kurzkettigen aliphatischen Diolen mit aliphatischen Polyisocyanaten eine hohe Wärmetönung bzw. Reaktionsenthalpie auf, was bei unzureichender Wärmeabfuhr zur Beschädigung bis hin zur Rückbildung von Monomeren und zur Zerstörung (Veraschung) des Polyurethans führt.

US2284637 offenbart ein Batch-Verfahren zur Herstellung von linearen Polyurethanen aus Diisocyanaten oder Dithioisocyanaten und Diolen oder Thiolen. Die Reaktionspartner werden hierzu in Gegenwart von Lösungsmitteln, sowie in lösungsmittelfreien Systemen umgesetzt.

US3038884 offenbart Polyurethane abgeleitet von 2,2,4,4-Tetramethyl-1,3-cyclobutandiol, welche einen höheren Schmelzpunkt und eine verbesserte thermische Stabilität, im Gegensatz zu Polyurethanen ohne cyclischen Gruppen in der Polymerkette, aufweisen. Die Reaktionspartner werden hierzu in Gegenwart von Lösungsmitteln, sowie in lösungsmittelfreien Batch-Systemen umgesetzt.

O. Bayer (Angew. Chem. 1947, 59, 257-288) offenbart die Herstellung von Polyurethanen aus aliphatischen Diisocyanaten und aliphatischen Diolen im Batch-Verfahren, insbesondere ein Polyurethan aus Hexamethylendiisocyanat und 1,4-Butandiol (Perlon U, Igamid U), welches als feines, sandiges Pulver aus einer Fällungspolymerisation in Dichlorbenzol erhalten wird. Es wird darauf hingewiesen, dass die Polyadditionsreaktion mit einer starken Wärmetönung verbunden ist und dass man im Fall einer lösungsmittelfreien Umsetzung die Temperatur der Schmelze auf ca. 200 °C ansteigen lassen muss.

DE728981 und US2511544 offenbaren ein Batch-Verfahren zur Umsetzung von Diisocyanaten mit Diolen und / oder Diaminen zu Polyurethan bzw. Polyharnstoffen in einem lösungsmittelhaltigen oder lösungsmittelfreien Verfahren.

Nachteilig bei den oben beschriebenen Batch-Verfahren ist, dass sich diese nur schwer aus dem Technikums-Maßstab upscalen lassen. Vor allem ist bei Systemen, die eine hohe exotherme Wärmetönung der Reaktion mit einer Reaktionsenthalpie von ≤ -500 kJ/kg aufweisen, der adiabatische Temperaturanstieg problematisch und die Abfuhr von Wärme aufgrund des im großen Maßstab deutlich kleineren Verhältnisses von zur Verfügung stehender Kühlfläche zu dem Volumen des Produktes unzureichend. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C führt aufgrund einer Vielzahl von thermischen Nebenreaktionen zu Qualitätseinbußen. Zu hohe Produkttemperaturen können prinzipiell durch eine Batch-Fahrweise verhindert werden, bei der mind. eines der beiden Monomere langsam zudosiert wird entsprechend der Kühlleistung des Reaktors. Eine Kühlung von hochviskosen Polymeren in Batch-Apparaten ist allerdings technisch durch die Oberfläche des Wärmeübertragers und die Strömungsgeschwindigkeit limitiert. Lange Verweilzeiten in Kombination mit hohen Temperaturen erhöhen die Zahl unerwünschter Nebenreaktionen und beeinflussen die Produkteigenschaften nachteilhaft.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können.

Die Herstellung von Granulaten aus Thermoplasten im Anschluss an ein Batch-Verfahren bedingt die Notwendigkeit, das schmelzeflüssige Polymer bei hoher Temperatur vorzuhalten, bis der Batchbehälter leer ist. Für thermisch empfindliche Produkte ergibt sich hieraus ein über den Granulierprozess / die Granulierzeit kontinuierlich veränderndes Produkteigenschaftsprofil.

Auch lassen sich Verfahrensabläufe aus Batch-Verfahren nur schwer bis gar nicht auf kontinuierliche Verfahren übertragen. Ein besonderer Augenmerk aus verfahrenstechnischer Sicht liegt in der kontrollierten Abführung der freigesetzten Reaktionswärme, was dazu führt, dass Umsetzungen mit hoher Wärmetönung nur schwierig zu handhaben sind.

Die Verwendung von Lösungsmitteln ist ebenfalls nachteilhaft, da im Produkt verbleibende Restlösungsmittel in die Umwelt freigesetzt werden können und unerwünschte Eigenschaften wie beispielsweise Geruch, Toxizität und / oder eine Verschlechterung der mechanischen Eigenschaften verursachen können. Die vollständige Entfernung von Restlösungsmitteln aus einem Polymer kann prinzipbedingt nicht gelingen; ihre Entfernung bis zu einem bestimmten Grenzwert ist grundsätzlich mit einem erhöhten technischen Aufwand und Energieverbrauch verbunden.

In US 5,627,254 wird ein kontinuierliches Verfahren zur Herstellung von thermoplastischen Urethanen aus Diisocyanaten, kurzkettigen Polyethylenglykolen, Butandiol und mit mehr als 25 Gew.% an Diolen mit einem hohen Molekulargewicht offenbart. Ebenfalls wird das Polyadditionsprodukt von Methylendiphenyldiisocyanat und Butandiol beschrieben. Die Komponenten werden hierzu in Gegenwart eines Katalysators in einem Zwei-Schnecken-Extruder umgesetzt. Allerdings ist bei Reaktionen aromatischer Isocyanate mit aliphatischen Polyolen die Tendenz zu störenden Nebenreaktionen sehr viel geringer als bei entsprechenden Umsetzungen aliphatischer Isocyanate. Eine Übertragung solcher Verfahren auf im wesentlichen aliphatische Edukte ist daher in der Regel nicht möglich.

Aufgabe der vorliegenden Erfindung war es daher, ein kontinuierliches, lösungsmittelfreies Verfahren zur Polyurethanherstellung bereitzustellen, das es ermöglicht Polyadditionsreaktion mit großer negativer Reaktionsenthalpie pro kg Reaktionsmasse zum ersten Mal im industriellen Maßstab durchzuführen.

Diese Aufgabe wird gelöst durch ein kontinuierliches, lösungsmittelfreies mehrstufiges Verfahren zur Herstellung von thermoplastischen Polyurethanen durch Umsetzung der Komponenten

A) ein oder mehrere Diole,
B) ein oder mehrere Diisocyanate, umfassend aliphatische, cycloaliphatische und / oder araliphatische Diisocyanate,
C) gegebenenfalls einem oder mehreren Katalysatoren, und
D) gegebenenfalls weiterer Hilfs- oder Zusatzstoffe,

wobei mindestens ein Diol der Komponente A ein Molelulargewicht von 62 g/mol bis 250 g/mol aufweist, wobei in mindestens einer Verfahrensstufe des mehrstufigen Verfahrens mindestens ein Hydroxy-terminiertes Prepolymer aus der Gesamtmenge oder einer ersten Teilmenge der Komponente A und einer ersten Teilmenge der Komponente B gebildet wird, wobei die Summe aller Teilmengen der Komponente A bzw. die Summe aller Teilmengen der Komponente B über alle Verfahrensstufen des Mehrstufenverfahrens zusammen die Gesamtmenge der eingesetzten Komponente A bzw. Komponente B ist, dadurch gekennzeichnet, dass die Komponenten A und B so ausgewählt werden, dass wenn man sie in einem molaren Verhältnis von 1,0 : 1,0 umsetzt die Gesamtreaktionsenthalpie über alle Verfahrensstufen von -900 kJ/kg bis -500 kJ/kg beträgt, bestimmt gemäß DIN 51007:1994-06.

Die Gesamtreaktionsenthalpie wird gemäß DIN 51007 Juni 1994 bestimmt, indem 20 mg - 30 mg einer Mischung von Komponente A und Komponente B in einer gasdicht versiegelten Glasampulle mit 3 K/min von -50 °C bis +450 °C erwärmt, die Differenz zwischen der Temperatur der Mischung und der Temperatur einer inerten Referenz aus Aluminiumoxid mittels Thermoelementen bestimmt wird und Komponente A und Komponente B in der Mischung in einem molaren Verhältnis von 1,0 : 1,0 vorliegen.

Der Vorteil des erfindungsgemäßen Verfahrens besteht darin, dass die Temperatur der Reaktionsmasse bei der erfindungsgemäßen Ausführung sehr gut kontrolliert werden kann und es daher nicht zu wesentlichen wärmebedingten Schädigungen, wie z.B. Stippenbildung oder Verfärbungen im Polyurethanprodukt kommt. Weiterhin ermöglicht das erfindungsgemäße Verfahren eine gute Skalierbarkeit vom Labor in einen industriellen Maßstab.

Unter "Gesamtreaktionsenthalpie" im Rahmen der vorliegenden Erfindung wird die massenspezifische Änderung der Enthalpie verstanden, die bei der Polymerisationsreaktion (Polyaddition) der Komponente A mit Komponente B insgesamt über alle Verfahrensstufen und ohne Verdünnung, bei einem molaren Verhältnis von Komponente A zu Komponente B von 1,0 : 1,0, erfolgt. Die Reaktionsenthalpie wird dabei in kJ je kg der Gesamtreaktionsmischung von Komponente A und Komponente B, bei einem molaren Verhältnis von Komponente A zu Komponente B von 1,0 : 1,0 angegeben. Eine Reaktion mit einer negativen Reaktionsenthalpie wird als eine exotherme Reaktion beschrieben, das bedeutet bei der Reaktion wird Energie in Form von Wärme freigesetzt.

Unter einem "lösungsmittelfreien Verfahren" im Rahmen der vorliegenden Erfindung wird die Umsetzung der Komponenten A und B ohne zusätzliche Verdünnungsmittel, wie beispielsweise organische Lösungsmittel oder Wasser verstanden, d.h. die Komponenten A und B werden bevorzugt unverdünnt miteinander zur Reaktion gebracht. Die Komponenten C und / oder D können gegebenenfalls in geeigneten Verdünnungsmittel vorliegen und als Lösung zu den Komponenten A und / oder B zugegeben werden. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt. Unter einem Lösungsmittel wird dabei eine Substanz verstanden, in der wenigstens eine der Komponenten A und B und gegebenenfalls C und / oder D gelöst, dispergiert, suspendiert oder emulgiert werden kann, welche aber nicht mit einer der Komponenten A und B und gegebenenfalls C und / oder D oder mit dem Polymer und dem / den Prepolymer(en) reagiert.

Im Rahmen der vorliegenden Erfindung, wird ein nicht-reaktives Prepolymer und / oder nicht-reaktives Polymer, welche nicht mit einer der Komponenten A und B und gegebenenfalls C und / oder D oder mit dem Polymer und dem / den Prepolymer(en) der Reaktionsmischung reagieren, nicht als "Lösungsmittel" angesehen.

Im Rahmen der vorliegenden Erfindung wird unter einem "nicht-reaktiv terminierten Prepolymer" ein Prepolymer verstanden, bei dem die reaktiven Gruppen (NCO-Gruppen oder OH-Gruppen) durch Reaktion mit geeigneten Reaktionspartnern (Kettenabbrechern) in chemische Gruppen umgewandelt wurden, die unter den genannten Reaktionsbedingungen weder mit NCO-Gruppen, noch mit OH-Gruppen reagieren. Als Kettenabbrecher eignen sich beispielsweise Mono-Alkohole wie Methanol, Mono-Amine wie Diethylamin und Monoisocyanate wie Butylisocyanat. Der molare Anteil der Kettenabbrecher kann beispielsweise von 0,001 mol-% bis 2 mol-% und bevorzugt von 0,002 mol-% bis 1 mol-% betragen, jeweils bezogen auf die Gesamtstoffmenge der entsprechenden Monomerkomponente.

In Rahmen der vorliegenden Erfindung bedeutet "Verfahrensstufe" die technische Realisierung von mindestens einer Grundoperation, wie Mischen, Reagieren, Transportieren, Wärmeübertragung etc. in Kombination mit der Dosierung von mindestens einer Teilmenge der Komponente A und / oder B und / oder eines Hydroxy-terminierten Prepolymers und / oder eines NCO-terminierten Prepolymers. Die Verfahrensstufe findet dabei in mindestens einem gegebenen Apparat mit einer definierten Durchsatzmenge statt. Ein Apparat beinhaltet die dafür benötigten Reaktoren, Maschinen, Rohrleitungen und Mess- und Regelgeräte. Eine Verfahrensstufe kann in einem oder mehreren Apparaten durchgeführt werden. Reaktoren, die für Polymerreaktionen verwendet werden können, sind dem Fachmann bekannt und werden beispielsweise in Moran, S. und Henkel, K.-D. 2016, Reactor Types and Their Industrial Applications, Ullmann's Encyclopedia of Industrial Chemistry, 149, beschrieben.

"Kontinuierliches Verfahren" oder "kontinuierliche Verfahren" im Sinne der Erfindung sind solche, bei denen der Zulauf der Edukte während einer kontinuierlichen Produktion in mindestens einen Apparat und der Austrag der Produkte aus mindestens einem gleichen oder verschiedenen Apparaten gleichzeitig, stattfinden, während bei diskontinuierlichen Verfahren der Zulauf der Edukte, die chemische Umsetzung und der Austrag der Produkte in der Regel zeitlich nacheinander ablaufen. Die kontinuierliche Verfahrensweise ist meistens von wirtschaftlichem Vorteil, da Anlagenstillstandszeiten infolge von Befüllungs- und Entleerungsprozessen vermieden werden.

Dem Fachmann ist bekannt, dass in der Polyurethanchemie Polymere und damit auch Prepolymere nicht als isolierte Spezies vorliegen, sondern immer als Gemische von Molekülen verschiedener Anzahl von Wiederholeinheiten und damit unterschiedlichen Molekulargewichten und gegebenenfalls auch unterschiedlicher Endgruppen vorliegen. Sowohl die Anzahl der Wiederholeinheiten pro Molekül als auch gegebenenfalls die Endgruppen sind in der Regel statistisch verteilt.

Im Rahmen der vorliegenden Erfindung werden unter dem Begriff "Prepolymer" alle Reaktionsprodukte oder Reaktionsproduktgemische aus den Komponenten A, B und gegebenenfalls C und D verstanden, bei denen das molare Verhältnis der eingesetzten Mengen von Komponente B zu Komponente A zwischen 0,1 : 1,0 und 0,95 : 1,0 liegt oder bei denen das molare Verhältnis der eingesetzten Mengen von Komponente A zu Komponente B zwischen 0,1 : 1,0 und 0,95 : 1,0 liegt.

Im Rahmen der vorliegenden Erfindung wird unter einem "Hydroxy-terminierten Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere Hydroxy-Gruppen, NCO-Gruppen und / oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

In einer bevorzugten Ausführungsform des erfindungsgemäßen Verfahrens wird in mindestens einer Verfahrensstufe ein Teil der entstehenden Gesamtreaktionsenthalpie abgeführt bevor die nächste Verfahrensstufe erreicht wird. Vorzugsweise werden in einer Verfahrensstufe von 25 % bis 98 %, besonders bevorzugt von 30 % bis 95 % und noch bevorzugter von 35 % bis 90 % und ganz besonders bevorzugt von 40 % bis 85 % der entstehenden Gesamtreaktionsenthalpie abgeführt, bevor das thermoplastische Polyurethan fertiggestellt ist. Bevorzugt wird ein großer Teil der abgeführten Reaktionsenthalpie bei der Herstellung des mindestens einen Hydroxy-terminierten Prepolymers und / oder eines Gemisches aus mindestens einem Hydroxy-terminierten Prepolymer und mindestens einem nicht-reaktiv terminierten Prepolymer durch Wärmeleitung abgeführt.

In einer bevorzugten Ausführungsform des erfindungsgemäßen Verfahrens ist die Gesamtreaktionsenthalpie über alle Verfahrensstufen im Bereich von -900 kJ/kg bis -550 kJ/kg, vorzugsweise im Bereich von -900 kJ/kg bis -580 kJ/kg, bevorzugter im Bereich von -900 kJ/kg bis -600 kJ/kg, noch bevorzugter im Bereich von -900 kJ/kg bis -650 kJ/kg ist, gemäß DIN 51007:1994-06, wenn die Komponenten A und B in einem molaren Verhältnis von 1:1 miteinander umgesetzt werden. Die entsprechenden Reaktionsenthalpien werden mittels einer Screening Differenz-Thermoanalyse (DTA) nach DIN 51007 (Juni 1994) bestimmt. Bei diesem Verfahren werden die entsprechenden Monomere in einem molaren Verhältnis von 1:1 vermischt und die Reaktionsenthalpie während eines bestimmten Temperaturprofils bestimmt. Das hier verwendete Temperaturprofil startet bei - 50 °C und endet bei +450 °C. Die verwendete Aufheizrate liegt bei 3 K/min. Als inerte Referenz wird Aluminiumoxid verwendet.

In einer bevorzugten Ausführungsform des erfindungsgemäßen Verfahrens liegt insgesamt ein molares Verhältnis von Komponente A zu Komponente B von 1,0 : 0,95 bis 0,95 : 1,0 vor.

Erfindungsgemäß werden die Komponente A und die Komponente B gegebenenfalls in Gegenwart der Komponenten C und D kontinuierlich miteinander umgesetzt. Die Verfahrensstufen zur Erzeugung der thermoplastischen Polyurethane können in einem einzelnen Apparat oder in einer Vielzahl von Apparaten durchgeführt werden. Beispielsweise kann eine Verfahrensstufe zunächst in einem ersten Apparat (z.B. Loop-Reaktor oder kühlbarer Mischer) durchgeführt werden und dann das Reaktionsgemisch in einen weiteren Apparat (z.B. Extruder oder andere Hochviskosreaktoren) überführt werden, in dem die Reaktion weitergeführt wird.

Die mittlere Verweilzeit in der mindestens einen Verfahrensstufe zur Herstellung des Hydroxy-terminierten Prepolymers beträgt dabei zwischen 5 Sekunden und 90 Minuten, bevorzugt zwischen 10 Sekunden und 60 Minuten, besonders bevorzugt zwischen 30 Sekunden und 30 Minuten jeweils bezogen auf eine Verfahrensstufe.

Dabei wird in mindestens einer Verfahrensstufe des mehrstufigen Verfahrens mindestens ein Hydroxy-terminiertes Prepolymer aus der Gesamtmenge oder einer ersten Teilmenge der Komponente A und einer ersten Teilmenge der Komponente B gebildet. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

In einer weiteren bevorzugten Ausführungsform des erfindungsgemäßen Verfahrens wird das mindestens eine Hydroxy-terminierte Prepolymer in mindestens einer Verfahrensstufe aus der Gesamtmenge der Komponente A und einer ersten Teilmenge der Komponente B gebildet. Vorzugsweise beträgt die erste Teilmenge der Komponente B von 40 % bis 95 %, bevorzugt von 60 % bis 95 %, bevorzugter von 75 % bis 93 % jeweils bezogen auf die molare Gesamtmenge der im Verfahren eingesetzten Komponente B.

Die Gesamtmenge der Komponente A mit einer ersten Teilmenge der Komponente B kann beispielsweise in einem ersten Apparat umgesetzt werden, um so das mindestens eine Hydroxy-terminierte Prepolymer aufzubauen.

In einem oder mehreren darauffolgenden Schritten können dann weitere Teilmengen der Komponente B, d.h. eine zweite, dritte etc. Teilmenge hinzugefügt werden, um weitere erfindungsgemäße, im Mittel höher molekulare, Hydroxy-terminierte Prepolymere aufzubauen. Die weiteren Teilmengen der Komponente B können in dem ersten Apparat hinzugegeben werden oder das Reaktionsgemisch des ersten Apparats kann in einen zweiten Apparat überführt werden und dort mit einer zweiten Teilmenge der Komponente B umgesetzt werden. Alle weiteren Teilmengen können dann beispielsweise in dem zweiten Apparat zugegeben werden oder die Reaktionsmischung wird jeweils nach der Umsetzung mit einer Teilmenge der Komponente B in einen nächsten Apparat überführt und dort mit einer weiteren Teilmenge der Komponente B umgesetzt bis die Gesamtmenge der Komponente A mit der Gesamtmenge der Komponente B umgesetzt wurde. Die räumlich und / oder zeitlich getrennte sequenzielle Zugabe der Komponente B hat den Vorteil, dass hierdurch die freiwerdende Reaktionswärme schrittweise erzeugt und damit besser abgeführt und / oder genutzt werden kann, beispielsweise um die Komponenten A und B vorzuwärmen bevor diese dem Reaktor zugeführt werden. In den einzelnen Aufbauschritten können auch erfindungsgemäße Mengen nicht-reaktiv terminierter Prepolymere, ein oder mehrere NCO-terminierte Prepolymere und / oder Kettenabbrecher wie beispielsweise Monoalkohole zugegeben werden. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

Im Rahmen der vorliegenden Erfindung wird unter einem "NCO-terminierten Prepolymer" ein Polymer bzw. Prepolymer verstanden, in dem mindestens 90 Anzahl-% der Molekülenden eine NCO-Gruppe aufweisen und die verbleibenden 10 Anzahl-% Molekülenden weitere NCO-Gruppen, Hydroxy-Gruppen und / oder nicht-reaktive Gruppen aufweisen. Wenn im Rahmen der vorliegenden Erfindung von einem NCO-terminierten Prepolymer gesprochen wird, kann es sich auch um ein Gemisch von NCO-terminierten Prepolymeren handeln oder um ein Gemisch von NCO-terminierten Prepolymeren und nicht-reaktiv terminierten Prepolymeren. Vorzugsweise handelt es sich um ein Gemisch von NCO-terminierten Prepolymeren. Die NCO-terminierten Prepolymere können durch Umsetzen einer Teilmenge der Komponente A mit einer Teilmenge der Komponente B erhalten werden, wobei die Komponente B im Überschuss vorliegt. Die Polyaddition kann in Gegenwart der Komponenten C und D erfolgen. Die Temperaturen zur Bildung des mindestens einen NCO-terminierten Prepolymers durch das erfindungsgemäße Verfahren können in Abhängigkeit von den eingesetzten Verbindungen ausgewählt werden. Bevorzugt ist hierbei jedoch, wenn die Umsetzung bei Temperaturen von ≥ 60 °C bis ≤ 260 °C, vorzugsweise von ≥ 80 °C bis ≤ 250 °C, besonders bevorzugt von ≥ 100 °C bis ≤ 245 °C und ganz besonders bevorzugt von ≥ 100 °C bis ≤ 240 °C durchgeführt wird. Die NCO-Terminierung ist statistisch verteilt und die mittlere NCO-Funktionalität des NCO-terminierten Prepolymers liegt zwischen 1,8 und 2,2, bevorzugt zwischen 1,9 und 2,1 und ganz besonders bevorzugt zwischen 1,95 und 2,05. Bei dem mindestens einen NCO-terminierten Prepolymer kann es sich um ein Gemisch von mindestens einem NCO-terminierten Prepolymer und mindestens einem nicht-reaktiv terminierten Prepolymer handeln, wobei die NCO-Funktionalität statistisch verteilt ist und die mittlere NCO-Funktionalität des NCO-terminierten Prepolymers zwischen 1,8 und 2,2, bevorzugt zwischen 1,9 und 2,1 und ganz besonders bevorzugt zwischen 1,95 und 2,05 liegt. Neigt das mindestens eine NCO-terminierte Prepolymer zur Kristallisation und besitzt es einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes des mindestens einen NCO-terminierten Prepolymers durchgeführt.

In einer besonderen Ausführungsform werden dabei in jeder Verfahrensstufe > 50 % , bevorzugt > 70 % und besonders bevorzugt > 85 % und ganz besonders bevorzugt > 90 % des theoretischen Umsatzes der Komponente B mit der Komponente A und / oder des mindestens einen NCO-terminierten Prepolymers und / oder des mindestens einen Hydroxy-terminierten Prepolymers erhalten.

In einer weiteren bevorzugten Ausführungsform des erfindungsgemäßen Verfahrens wird das mindestens eine Hydroxy-terminierte Prepolymer in mindestens einer Verfahrensstufe aus einer ersten Teilmenge der Komponente A und einer ersten Teilmenge der Komponente B gebildet, wobei das molare Verhältnis der eingesetzten Teilmengen von Komponente B zu Komponente A von 0,65 : 1,0 bis 0,98 : 1,0, vorzugsweise von 0,70 : 1,0 bis 0,97 : 1,0, bevorzugter von 0,75 : 1,0 bis 0,96 : 1,0 und ganz besonders bevorzugt 0,75 : 1,0 bis 0,95 : 1,0 beträgt und wobei als erste Teilmenge A mindestens 50 %, vorzugsweise 70 % noch bevorzugter 90 % bezogen auf die molare Gesamtmenge der im Verfahren eingesetzten Komponente A eingesetzt wird.

In einer oder mehreren darauffolgenden Verfahrensstufen können dann weitere Teilmengen der Komponente A und der Komponente B zugeführt werden, um weitere erfindungsgemäße, im Mittel höher molekulare, Hydroxy-terminierte Prepolymere aufzubauen. Vorzugsweise wird aus dem mindestens einen Hydroxy-terminierten Prepolymer kein NCO-terminiertes Prepolymer durch Zugabe einer weiteren Teilmenge der Komponente B gebildet. Wobei im Reaktionsverlauf statistisch transient gebildete aber nicht beständige NCO-terminierte Prepolymere nicht gezählt werden. Die weiteren Teilmengen der Komponenten A, B, gegebenenfalls mindestens ein Hydroxy-terminiertes Prepolymer und / oder mindestens ein NCO-terminiertes Prepolymer sowie gegebenenfalls Kettenabbrecher wie Monoalkohole können auch in weiteren Apparaten, d.h. einem zweiten, dritten etc. Apparat eingebracht werden und dort jeweils zu einem weiteren Prepolymer umgesetzt werden. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

In einer weiteren bevorzugten Ausführungsform des erfindungsgemäßen Verfahrens werden die Komponenten A und B und / oder oben genannten Prepolymere (Hydroxy-terminierte Prepolymere, nicht-reaktiv terminierte Prepolymere) und / oder kompatiblen Gemischen hieraus der Reaktionsmischung mit einer Temperatur zugeführt, die mindestens 30 K, bevorzugt mindestens 50 K und besonders bevorzugt 100 K unter der der Reaktionsmischung liegt. Dies hat den Vorteil, dass ein Teil der Reaktionsenthalpie durch die Erwärmung der Komponenten A und B und / oder oben genannten Prepolymere abgeführt wird.

Das Hydroxy-terminierte Prepolymer bzw. das Gemisch enthaltend mindestens ein Hydroxy-terminiertes Prepolymer kann in der Schmelze bei Reaktionsbedingungen eine niedrige oder eine hohe Viskosität aufweisen. Eine niedrige Viskosität ist beispielsweise 0,1 Pa*s, eine hohe Viskosität ist beispielsweise 500 Pa*s. Betrachtet wird hierbei die newtonsche Grenzviskosität bei kleinen Scherraten. Eine niedrige Viskosität des Hydroxy-terminierten Prepolymers oder Gemisches im Vergleich zu der des thermoplastischen Polyurethans hat den Vorteil, dass die verwendeten Wärmeübertrager effizient arbeiten können und Wärmeübertrager mit geringer Baugröße bzw. Oberfläche verwendet werden können. Weiterhin entsteht in den bevorzugt verwendeten durchströmten Wärmeübertragern ein geringer Druckverlust, im Vergleich zu dem, der bei der Verarbeitungen von höher viskosen Prepolymeren auftritt. Bevorzugt liegt die Viskosität des erfindungsgemäßen Hydroxy-terminierten Prepolymers der ersten Verfahrensstufe bzw. des Gemisches aus mindestens einem Hydroxy-terminierten Prepolymer und mindestens einem nicht-reaktiv terminierten Prepolymer im Bereich von 0,1 Pa*s bis 10 Pa*s bestimmt in der Schmelze bei den typischen Prozessbedingungen bezüglich Prozesstemperatur und Scherung.

In einer weiteren bevorzugten Ausführungsform erfolgt die Bestimmung bzw. Berechnung der Viskosität bevorzugt im Prozess, beispielweise anhand der Messung von Druckverlusten in Rohrleitungsstücken oder in Statikmischern. Für kreisförmige Rohrleitungsstücke kann für laminare Strömung die Hagen-Poiseuille - Gleichung zur Berechnung von Druckverlusten ($\Delta p$ in Pascal) in der Form

$$\Delta p = \frac{128}{\pi} \frac{\dot{V}}{D^3} \eta \frac{L}{D}$$

($\dot{V}$ Volumenstrom in Kubikmeter pro Sekunde, $D$ Innendurchmesser des durchströmten Rohres in Metern, $\pi \approx 3.14159 \ldots$ Kreiszahl, $L$ Länge des Rohres in Metern, $\eta$ Viskosität in Pascal mal Sekunden) umgestellt werden zu der Bestimmungsgleichung für die Viskosität

$$\eta = \frac{\pi}{128} \frac{D^4}{\dot{V} L} \Delta p$$

Bevorzugt wird die abgeführte Reaktionsenthalpie mit Hilfe von Wärmeübertragern abgeführt, die diese Reaktionsenthalpie als Wärme an ein Wärmeträgermittel abgeben. Dieses Wärmeträgermittel kann beispielsweise Wasser im flüssigen Zustand, verdampfendes Wasser oder Wärmeträgeröl, wie beispielsweise Marlotherm SH (Fa. Sasol) oder Diphyl (Fa. Lanxess), in flüssigem Zustand sein.

Das Wärmeträgermittel hat bevorzugt beim Eintritt in den Wärmeübertrager eine Temperatur, die so hoch liegt, dass Verstopfungen durch Kristallisation und / oder Verfestigung der Reaktionsmischung vermieden werden.

Das Wärmeträgermittel kann auch verwendet werden, um den Produktstrom in dem Wärmeübertrager zunächst auf eine Temperatur vorzuheizen, bei der die Reaktion beginnt.

Die Wärmeübertrager können in verschiedener Art ausgeführt sein. Beispielsweise kann es sich um Rohrbündel-Wärmeübertrager mit Leerrohren oder Rohrbündel-Wärmeübertrager mit Einbauten zur Verbesserung des Wärmeübergangs (z.B. Statikmischer wie vom Typ Kenics, SMX von Sulzer oder SMXL von Sulzer oder CSE-X von Fa. Fluitec) handeln, oder beispielsweise kann es sich um Platten-Wärmeübertrager handeln, oder beispielsweise kann es sich um temperierbare statische Mischer handeln, die beispielsweise vom Typ SMR (Fa. Sulzer) oder CSE-XR (Fa. Fluitec) sein können.

Die Temperaturen zur Bildung des mindestens einen Hydroxy-terminierten Prepolymers durch das erfindungsgemäße Verfahren können in Abhängigkeit von den eingesetzten Verbindungen ausgewählt werden. Bevorzugt ist hierbei jedoch, wenn die Umsetzung bei Temperaturen von ≥ 40 °C bis ≤ 260 °C, vorzugsweise von ≥ 60 °C bis ≤ 250 °C, bevorzugter von ≥ 100 °C bis ≤ 240 °C, besonders bevorzugt von ≥ 120 °C bis ≤ 220 °C durchgeführt wird. Dabei wird toleriert, dass das Produkt bei der Umsetzung kurzfristige (< 60 Sekunden) Abweichungen der Reaktionstemperatur von den oben genannten Bereichen erfährt.

Neigt das mindestens eine Hydroxy-terminierte Prepolymer zur Kristallisation und besitzt es einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes des mindestens einen Hydroxy-terminierten Prepolymers durchgeführt.

In einer weiteren bevorzugten Ausführung hat das Hydroxy-terminierte Prepolymer eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 jeweils bezogen auf die Stoffmenge der gesamten Prepolymer-Mischung.

In mindestens einer weiteren Verfahrensstufe, wird das mindestens eine Hydroxy-terminierte Prepolymer zum thermoplastischen Polyurethan umgesetzt.

In einer bevorzugten Ausführungsform des erfindungsgemäßen Verfahrens wird in mindestens einer weiteren auf die Bildung des mindestens einen Hydroxy-terminierten Prepolymers folgenden Verfahrensstufe, das mindestens eine Hydroxy-terminierte Prepolymer mit einer weiteren Teilmenge der Komponente B zum thermoplastischen Polyurethan umgesetzt. Vorzugsweise beträgt die weitere Teilmenge der Komponente B von 5 % bis 60 %, bevorzugt von 5 % bis 40 %, bevorzugter von 7 % bis 25 % jeweils bezogen auf die molare Gesamtmenge der im Verfahren eingesetzten Komponente B, mit der Maßgabe, dass die Summe aller Teilmengen der Komponente B über alle Verfahrensstufen des Mehrstufenverfahrens zusammen die molare Gesamtmenge der eingesetzten Komponente B ist. Entweder kann das mindestens eine Hydroxy-terminierte Prepolymer auf einmal mit der verbleibenden Gesamtmenge der Komponente B umgesetzt werden oder es wird zunächst nur mit einer Teilmenge der Komponente B umgesetzt und dann werden schrittweise weitere Teilmengen der Komponente B zugeführt und zur Reaktion gebracht, bis die Gesamtmenge der Komponente B verbraucht ist. Auch hier hat das schrittweise Umsetzen den Vorteil, dass der Reaktionsverlauf besser kontrolliert, das thermoplastische Polyurethan selektiv aufgebaut und die Reaktionswärme besser abgeführt werden kann.

In einer bevorzugten Ausführungsform des erfindungsgemäßen Verfahrens wird in mindestens einer weiteren auf die Bildung des mindestens einen Hydroxy-terminierten Prepolymers folgenden Verfahrensstufe, das mindestens eine Hydroxy-terminierte Prepolymer mit einer zweiten Teilmenge der Komponente B und einer zweiten Teilmenge der Komponente A zum thermoplastischen Polyurethan umgesetzt, mit der Maßgabe, dass die Summe aller Teilmengen der Komponente A und die Summe aller Teilmengen der Komponente B über alle Verfahrensstufen des Mehrstufenverfahrens zusammen die molare Gesamtmenge der eingesetzten Komponente A bzw. Komponente B ist. Entweder kann das mindestens eine Hydroxy-terminierte Prepolymer auf einmal mit der verbleibenden Gesamtmenge der Komponente B und der Komponente A umgesetzt werden oder es wird zunächst nur mit einer zweiten Teilmenge der Komponente B umgesetzt und dann schrittweise weitere Teilmengen der Komponente B zugeführt bzw. zunächst nur mit einer zweiten Teilmenge der Komponente A umgesetzt und dann schrittweise weitere Teilmengen der Komponente A zugeführt oder weiter Teilmengen der Komponente A und weiter Teilmengen der Komponente B zusammen oder abwechselnd zugegeben und zur Reaktion gebracht, bis die Gesamtmenge der Komponente B und Komponente A verbraucht ist. Auch hier hat das schrittweise Umsetzen den Vorteil, dass der Reaktionsverlauf besser kontrolliert, das thermoplastische Polyurethan selektiv aufgebaut und die Reaktionswärme besser abgeführt werden kann.

In einer bevorzugten Ausführungsform des erfindungsgemäßen Verfahrens wird das mindestens eine Hydroxy-terminierte Prepolymer in mindestens einer Verfahrensstufe aus einer ersten Teilmenge der Komponente A und einer ersten Teilmenge der Komponente B gebildet und in mindestens einer weiteren auf die Bildung des Hydroxy-terminierten Prepolymers folgenden Verfahrensstufe wird das mindestens eine Hydroxy-terminierte Prepolymer mit mindestens einem NCO-terminierte Prepolymer zum thermoplastischen Polyurethan umgesetzt, wobei das mindestens eine NCO-terminierte Prepolymer in mindestens einer weiteren Verfahrensstufe aus einer zweiten Teilmenge der Komponente A und einer zweiten Teilmenge der Komponente B gebildet wird.

Es kann beispielsweise zunächst mindestens ein Hydroxy-terminiertes Prepolymer aus einer ersten Teilmenge der Komponente A und einer ersten Teilmenge der Komponente B hergestellt werden und separat mindestens ein NCO-terminiertes Prepolymer aus einer zweiten Teilmenge der Komponente A und einer zweiten Teilmenge der Komponente B hergestellt werden. Die erste und zweite Teilmenge der Komponente A kann dabei der Gesamtmenge der Komponente A entsprechen und die erste und zweite Teilmenge der Komponente B kann dabei der Gesamtmenge der Komponente B entsprechen. Möglich ist auch, dass neben der jeweils umgesetzten ersten und zweiten Teilmenge der Komponente A bzw. B noch eine weitere, nicht umgesetzte Teilmenge der Komponente A und / oder B vorhanden ist. Das mindestens eine Hydroxy-terminierte Prepolymer kann dann mit dem mindestens einen NCO-terminierten Prepolymer zum thermoplastischen Polyurethan umgesetzt werden. Sollte zur Herstellung des Hydroxy-terminierten Prepolymers, NCO-terminierten Prepolymers und gegebenenfalls nicht-reaktiv terminierten Prepolymers nicht die Gesamtmenge der Komponente A und / oder B verbraucht worden sein, dann wird die verbleibende Teilmenge der Komponente A und / oder B entweder mit dem Reaktionsprodukt, welches durch die Umsetzung der Prepolymere (Hydroxy-terminierte Prepolymere, NCO-terminierte Prepolymere und nicht-reaktiv terminierte Prepolymere) miteinander entsteht, in einer getrennten Verfahrensstufe umgesetzt oder zusammen mit den Prepolymeren in einer Verfahrensstufe zum thermoplastischen Polyurethan umgesetzt. Die Umsetzung der Reaktanden kann schrittweise erfolgen durch die Zugabe beliebiger Teilmengen oder in einem Schritt durch Zugabe der Gesamtmenge. Die Reihenfolge der Zugabe der Teilmengen ist frei wählbar. Es ist allerdings bevorzugt entweder das mindestens eine Hydroxy-terminierte Prepolymer vorzulegen und dazu mindestens ein NCO-terminiertes Prepolymer zuzugeben.

Beispielsweise kann die Gesamtmenge des erzeugten mindestens einen NCO-terminierten Prepolymers mit der Gesamtmenge des mindestens einen Hydroxy-terminierten Prepolymers auf einmal umgesetzt werden oder es wird zunächst eine Teilmenge des mindestens einen NCO-terminierten Prepolymers mit der Gesamtmenge des mindestens einen Hydroxy-terminierten Prepolymers umgesetzt und in darauf folgenden Verfahrensstufen weitere Teilmengen des mindestens einen NCO-terminierten Prepolymers hinzugegeben und umgesetzt.

Ebenfalls kann beispielsweise eine erste Teilmenge des mindestens einen NCO-terminierten Prepolymers mit einer ersten Teilmenge des mindestens einen Hydroxy-terminierten Prepolymers umgesetzt werden und in weiteren darauf folgenden Verfahrensstufen weitere Teilmengen hinzugegeben und jeweils umgesetzt werden, bis die erzeugte Gesamtmenge des mindestens einen Hydroxy-terminierten Prepolymers und die erzeugte Gesamtmenge des mindestens einen NCO-terminierten Prepolymers abreagiert ist.

Vorzugsweise werden das mindestens eine Hydroxy-terminierte Prepolymer und das mindestens eine NCO-terminierten Prepolymer in einem molaren Verhältnis von 1,0 : 0,95 bis 0,95 : 1,0, bevorzugt in einem molaren Verhältnis von 1,0 : 0,98 bis 0,98 : 1,0 umgesetzt.

In einer besonderes bevorzugten Ausführungsform sind hierbei die nach der stufenweisen Zugabe entstehenden OH- oder NCO- funktionellen Prepolymere bei 25 °C Feststoffe mit einem Schmelzpunkt von bevorzugt > 50 °C, bevorzugt > 90 °C, besonders bevorzugt > 120 °C und ganz besonders bevorzugt > 140 °C.

Die zahlenmittlere Molmasse ($M_n$) des entstehenden thermoplastischen Polyurethans kann durch das molekulare Verhältnis der eingesetzten Komponenten A und B und / oder durch den Umsatz und / oder durch den Einsatz von Kettenabbrechern oder durch eine Kombination aus allen Möglichkeiten eingestellt werden. Der Zusammenhang zwischen dem molekularen Verhältnis der Komponenten A und B, dem Gehalt von Kettenabbrechern, dem Umsatz und der erzielbaren zahlenmittleren Molmasse ist dem Fachmann als Carothers-Gleichung bekannt.

Dem Fachmann ist klar, dass die Erzeugung des thermoplastischen Polyurethans in den oben genannten Ausführungsformen in einer Vielzahl von Verfahrensstufen erfolgen kann. Die Komponenten C und D können dabei nur in einzelnen Verfahrensstufen oder in allen Verfahrensstufen unabhängig voneinander zugegeben werden.

In einer weiteren bevorzugten Ausführungsform des erfindungsgemäßen Verfahrens werden die Komponenten A und B und / oder oben genannten Prepolymere (Hydroxy-terminierte Prepolymere, NCO-terminierte Prepolymere, nicht-reaktiv terminierte Prepolymere) und / oder kompatiblen Gemischen hieraus der Reaktionsmischung mit einer Temperatur zugeführt, die mindestens 30 K, bevorzugt mindestens 50 K und besonders bevorzugt 100 K unter der der Reaktionsmischung liegt. Dies hat den Vorteil, dass ein Teil der Reaktionsenthalpie durch die Erwärmung der Komponenten A und B und / oder oben genannten Prepolymere abgeführt wird.

Die Temperaturen zur Bildung des thermoplastischen Polyurethans durch Umsetzung des mindestens einen Hydroxy-terminierten Prepolymers mit einer zweiten Teilmenge der Komponente B im erfindungsgemäßen Verfahren können in Abhängigkeit von den eingesetzten Verbindungen ausgewählt werden. Bevorzugt ist hierbei jedoch, wenn die Umsetzung bei Temperaturen von $\geq$ 60 °C bis $\leq$ 260 °C, vorzugsweise von $\geq$ 80 °C bis $\leq$ 250 °C, besonders bevorzugt von $\geq$ 100 °C bis $\leq$ 245 °C und ganz besonders bevorzugt von $\geq$ 120 °C bis $\leq$ 240 °C durchgeführt wird. Dabei wird toleriert, dass das Produkt bei der Umsetzung kurzfristige (< 60 Sekunden) Abweichungen der Reaktionstemperatur von den oben genannten Bereichen erfährt.

Neigt das thermoplastische Polyurethan zur Kristallisation und besitzt es einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes des thermoplastischen Polyurethans durchgeführt.

In einer weiteren bevorzugten Ausführungsform des erfindungsgemäßen Verfahrens wird das mindestens eine Hydroxy-terminierte Prepolymer in mindestens einer ersten Verfahrensstufe hergestellt und in mindestens einer zweiten Verfahrensstufe mit einer zweiten Teilmenge der Komponente B, Komponente A und / oder dem mindestens einen NCO-terminierten Prepolymer zum thermoplastischen Polyurethan umgesetzt, wobei die erste Verfahrensstufe unterschiedliche Reaktionsbedingungen bezüglich Temperatur, Druck und / oder Scherrate im Vergleich zu der mindestens zweiten Verfahrensstufe aufweisen kann und die Verfahrensstufen miteinander über mindestens eine Stoff transportierende Leitung verbunden sind. Das mindestens eine NCO-terminierte Prepolymer wird vorzugsweise in einer dritten Verfahrensstufe hergestellt, die von der mindestens einen ersten und zweiten Verfahrensstufe getrennt ist und unterschiedliche Reaktionsbedingungen bezüglich Temperatur, Druck und Scherrate im Vergleich zu der mindesten einen ersten und zweiten Verfahrensstufe aufweist und mit der mindestens einen ersten oder zweiten Verfahrensstufe über mindestens eine Stoff transportierende Leitung verbunden ist.

In einer anderen Ausführungsform kann das mindestens eine NCO-terminierte Prepolymer auch in der mindestens einen zweiten Verfahrensstufe unabhängig hergestellt werden und nach erfolgter Umsetzung der Komponenten zu dem mindestens einen NCO-terminierten Prepolymer in mindestens einer dritten Verfahrensstufe mit dem mindestens einen Hydroxy-terminierten Prepolymer zum thermoplastischen Polyurethan umgesetzt werden.

Neigt eines der erfindungsgemäßen Prepolymere zur Kristallisation und besitzt es einen Schmelzpunkt, so wird die Wandtemperatur der Apparate erfindungsgemäß in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des jeweiligen Schmelzpunktes des Hydroxy-terminierten Prepolymers oder des gegebenenfalls NCO-terminierten Prepolymers und / oder des gegebenenfalls nicht reaktiv-terminierten Prepolymers oder eines Gemisches von mindestens zwei von diesen, in der Umsatzstufe gehalten.

In einer bevorzugten Variante wird als Apparat zur Erzeugung des mindestens einen Hydroxy-terminierten Prepolymers bzw. des mindestens einen NCO-terminierten Prepolymers ein Umpumpreaktor verwendet, in dem die Komponenten A und B in gewünschten Anteilen und gegebenenfalls die Komponenten C und D in gewünschten Anteilen zudosiert werden und in dem die entstehende Reaktionsenthalpie in einem Wärmeübertrager abgeführt wird. In einer weiteren bevorzugten Variante wird zur Umsetzung der Komponenten ein Mischer-Wärmeübertrager verwendet, in dem die Reaktion und die Abführung der Wärme am gleichen Ort geschieht.

Die mittlere Verweilzeit in der Verfahrensstufe geeignet zur Bildung des thermoplastischen Polyurethans aus dem mindestens einen Hydroxy-terminierten Prepolymer beträgt von 5 Sekunden bis 60 Minuten, bevorzugt von 30 Sekunden bis 60 Minuten, besonders bevorzugt von 1 Minute bis 50 Minuten und ganz besonders bevorzugt von 10 Minuten bis 50 Minuten.

Zur Umsetzung des mindestens einen Hydroxy-terminierten Prepolymers mit einer zweiten Teilmenge der Komponente B, der Komponente A und / oder des mindestens einen NCO-terminierten Prepolymers oder eines beliebigen Gemisches hiervon oder eines Gemisches der jeweiligen Komponenten mit mindestens einem nicht-reaktiven Prepolymer zum thermoplastischen Polyurethan ist es erforderlich, das Verfahren auf den exponentiellen Viskositätsanstieg in dieser Phase abzustimmen. Dafür werden bevorzugt Apparate eingesetzt, in denen das Produkt mit mechanischer Energie aktiv bewegt wird. Besonders bevorzugt werden Apparate eingesetzt, bei denen sich die Werkstoffoberflächen gegenseitig - bis auf Spiele - abreinigen. Solche Apparate sind beispielsweise gleichlaufende Mehrwellenextruder wie Doppel- oder Vierwellenextruder oder Ringextruder, gegenläufige Mehrwellenextruder, Ko-Kneter oder Planetwalzenextruder und Rotor-Stator Systeme. Weitere geeignete Apparate sind ein- oder zweiwellige großvolumige Kneter. Die zweiwelligen großvolumigen Kneter können gleich- oder gegenläufige sein. Beispiele für großvolumige Kneter sind beispielsweise CRP (Fa. List Technology AG), Reacom (Buss-SMS-Canzler GmbH), Reasil (Buss-SMS-Canzler GmbH), KRC kneader (Kurimoto, Ltd). In einer bevorzugten Ausführungsform wird mindestens ein solcher Apparat mit mindestens einem Statikmischer, Dynamikmischer oder Mischer-Wärmeübertrager kombiniert, wobei der Statikmischer, Dynamikmischer oder Mischer-Wärmeübertrager eine Mischung der Komponente B, der Komponente A bzw. des mindestens einen NCO-terminierten Prepolymers oder eines beliebigen Gemisches hiervon mit dem Hydroxy-terminierten Prepolymer erzeugt. Neigt eine der Komponenten der Mischung zur Kristallisation, so wird die Temperatur der Mischung durch geeignete Maßnahmen in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes der bei der höchsten Temperatur schmelzenden Komponente beziehungsweise des bei der höchsten Temperatur schmelzenden Reaktionsproduktes der Komponenten gehalten. Dabei ist die Verweilzeit im Statikmischer, Dynamikmischer oder Mischer-Wärmeübertrager erfindungsgemäß so kurz, dass der Viskositätsanstieg (bedingt durch die Polyadditions-Reaktion der reaktiven Komponenten miteinander) nicht zu einer Verstopfung des Statikmischers, Dynamikmischers oder Mischer-Wärmeübertragers führt und / oder ein Druckaufbau auf < 50 bar, bevorzugt < 30 bar, besonders bevorzugt < 20 bar und ganz besonders bevorzugt < 10 bar begrenzt wird, und das entstehende Gemisch einem Apparat zugeführt wird, der der obigen Liste entspricht. Das Verhältnis der Verweilzeiten im Statikmischer, Dynamikmischer oder Mischer-Wärmeübertrager zu denen im darauf folgenden Apparat beträgt bevorzugt von 1 : 100 bis 1 : 2, besonders bevorzugt von 1 : 50 bis 1 : 5 und ganz besonders bevorzugt von 1 : 30 bis 1 : 10. Die Komponenten können dabei in einer besonderen Ausführungsform auch als Gemisch mit mindestens einem nicht-reaktiven Prepolymer vorliegen.

In einer weiteren bevorzugten Ausführungsform findet die finale Verfahrensstufe in einem Extruder statt.

In einer weiteren bevorzugten Ausführungsform findet die finale Verfahrensstufe in einer Kombination eines Statikmischers, Dynamikmischers oder Mischer-Wärmeübertragers mit einem beheiztem Transportband statt.

In einer weiteren bevorzugten Ausführungsform werden in der finalen Verfahrensstufe mindestens zwei der oben genannten Apparate kombiniert, beispielsweise ein Extruder mit einem weiteren Extruder oder ein Extruder mit einem großvolumigen Kneter. In dieser Ausführung beträgt das Verhältnis der Verweilzeit im ersten Apparat zu der im zweiten Apparat bevorzugt von 1 : 100 bis 1 : 2, bevorzugter von 1 : 50 bis 1 : 3 und ganz besonders bevorzugt von 1 : 30 bis 1 : 5.

In einer weiteren bevorzugten Version wird in der finalen Verfahrensstufe mindestens einer der oben genannten Apparate mit einem Bandreaktor kombiniert, bei dem das Produkt aus einem der oben genannten Apparate auf ein umlaufendes Band gegeben wird und dort weiterreagiert. Neigt das thermoplastische Polyurethan zur Kristallisation und besitzt es einen Schmelzpunkt, so wird die Temperatur des Produkts auf dem Bandreaktor durch geeignete Maßnahmen in einem Temperaturbereich von 100 K unterhalb bis 50 K oberhalb des Schmelzpunktes, bevorzugt von 80 K unterhalb bis 10 K oberhalb, besonders bevorzugt von 50 K unterhalb bis 10 K oberhalb des Schmelzpunktes, ganz besonders bevorzugt von 30 K unterhalb bis 10 K oberhalb des Schmelzpunktes gehalten.

Im Anschluss an die Umsetzung zum thermoplastischen Polyurethan wird das Produkt in eine Handelsform gebracht, typischerweise Granulat. Nach der Umsetzung in der finalen Verfahrensstufe liegt das Produkt im schmelzeflüssigen Zustand vor, wird im Schmelzezustand zerkleinert und durch Abkühlung zum Erstarren gebracht oder zuerst durch Abkühlen zum Erstarren gebracht und anschließend zerkleinert. Dies kann beispielsweise mit den dem Fachmann bekannten Methoden der Stranggranulierung, der Unterwasser-Stranggranulierung, der Wasserringgranulierung und der Unterwassergranulierung geschehen. Die Abkühlung erfolgt bevorzugt mit Wasser; auch eine Abkühlung mit Luft oder anderen Medien ist möglich.

Nach Umsetzung auf einem Bandreaktor kann das Produkt auch abgekühlt, gebrochen und gemahlen werden.

Das so erhaltene thermoplastische Polyurethan kann erfindungsgemäß in einem Feststoffmischprozess gemischt und in einem weiteren Extruder aufgeschmolzen und wieder granuliert werden. Dies ist vor allem dann bevorzugt, wenn Produkt nach dem Bandreaktor gekühlt und gemahlen wird, weil dieser Vorgang auch die Produktform homogenisiert.

In einer weiteren bevorzugten Ausführungsform des erfindungsgemäßen Verfahrens wird ein Gesamtdurchsatz an Polyurethanpolymer von mindestens 0,5 kg/h erreicht. Vorzugsweise wird ein Gesamtdurchsatz an Polyurethanpolymer von mindestens 2 kg/h, besonders bevorzugt von mindestens 100 kg/h und ganz besonders bevorzugt von mindestens 1000 kg/h erreicht.

In einer weiteren bevorzugten Ausführungsform des erfindungsgemäßen kontinuierlichen lösungsmittelfreien mehrstufigen Verfahrens umfasst das Verfahren die folgenden Schritte:

i) kontinuierliches Vermischen der Gesamtmenge oder einer ersten Teilmenge der Komponente A mit einer ersten Teilmenge der Komponente B und gegebenenfalls der Komponenten C und / oder D,

ii) kontinuierliches Reagieren lassen der Mischung aus Schritt i) in mindestens einer erste Verfahrensstufe unter Bildung des mindestens einem Hydroxy-terminierten Prepolymers, wobei die Temperatur der Reaktionsmischung in der mindestens einen ersten Verfahrensstufe unterhalb der Zersetzungstemperatur des mindestens einen Hydroxy-terminierten Prepolymers gehalten wird,

iii) kontinuierliches Überführen des in Schritt ii) gebildeten mindestens einen Hydroxy-terminierten Prepolymers in eine zweite Verfahrensstufe, wobei die zweite Verfahrensstufe durch mindestens eine Stofftransportleitung mit der ersten Verfahrensstufe verbunden ist,

iv) gegebenenfalls kontinuierliches Vermischen und Reagieren lassen der verbleibenden Teilmengen der Komponenten A und B in einer dritten Verfahrensstufe, um mindestens ein NCO-terminiertes Prepolymer herzustellen, wobei die Temperatur der Reaktionsmischung in der dritten Verfahrensstufe unterhalb der Zersetzungstemperatur des mindestens einen NCO-terminierten Prepolymers gehalten wird, wobei die dritte Verfahrensstufe mit der ersten und / oder zweiten Verfahrensstufe über mindestens eine Stofftransportleitung verbunden ist,

v) kontinuierliches Vermischen des mindestens einen Hydroxy-terminierten Prepolymers mit der verbleibenden Teilmenge der Komponente B und gegebenenfalls mit der verbleibenden Teilmenge der Komponente A und / oder dem mindestens einen NCO-terminierten Prepolymer aus Schritt iv),

vi) kontinuierliches Reagieren lassen der Mischung aus Schritt v) unter Erhalt des thermoplastischen Polyurethans, wobei die Temperatur der Reaktionsmischung in der Verfahrensstufe unterhalb der Zersetzungstemperatur des thermoplastischen Polyurethans gehalten wird,

vii) kontinuierliches Abkühlen und Granulieren des thermoplastischen Polyurethans.

Als Komponente A werden erfindungsgemäß ein oder mehrere Diole eingesetzt, wobei mindestens ein Diol der Komponente A ein Molekulargewicht von 62 g/mol bis 250 g/mol aufweist. Erfindungsgemäß kann auch ein Gemisch von Diolen eingesetzt werden, in dem nur ein Teil der Diole ein Molekulargewicht von 62 g/mol bis 250 g/mol aufweist und der verbleibende Teil der Diole ein Molekulargewicht von > 250 g/mol aufweist, wobei die Gesamtreaktionsenthalpie über alle Verfahrensstufen im beanspruchten Bereich liegen muss. Die Diole und / oder deren Vorläuferverbindungen können aus fossilen oder biologischen Quellen gewonnen worden sein. Dem Fachmann ist bewusst, dass die Gesamtreaktionsenthalpie bei der Umsetzung von einem Diisocyanat mit verschiedenen Diolen, von dem Molekulargewicht des Diols abhängt. Die Umsetzung von beispielsweise 1,6-Diisocyanatohexan mit einem kurzkettigen Diol wie beispielsweise 1,4-Butandiol weist eine deutlich höhere Gesamtreaktionsentalphie auf als die Umsetzung von beispielsweise 1,6-Diisocyanatohexan mit einem langkettigen Diol wie beispielsweise einem Polytetramethylenglykolpolyol mit einem zahlenmittleren Molekulargewicht von 1000 g/mol. Als langkettige Diole kommen beispielsweise Polyester-, Polyether-, Polycarbonat-, Poly(meth)acrylat- und/oder Polyurethan-Polyole in Betracht.

Sollte beispielsweise die Umsetzung eines oder mehrere Diisocyanate mit einem Gemisch aus Diolen mit einem Molekulargewicht von 62 g/mol bis 250 g/mol und Diolen mit einem Molekulargewicht von > 250 g/mol eine Gesamtreaktionsenthalpie über alle Verfahrensstufen aufweisen, die nicht im beanspruchten Bereich liegt, so weiß der Fachmann, dass, beispielsweise durch Erhöhung des Gehalts an Diolen mit einem Molekulargewicht von 62 g/mol bis 250 g/mol und Erniedrigung des Gehalts an Diolen mit einem Molekulargewicht von > 250 g/mol in dem Gemisch, die gewünschte Gesamtreaktionsenthalpie so eingestellt werden kann, dass sie im beanspruchten Bereich liegt.

In einer bevorzugten Ausführungsform weisen 90 mol% bis 100 mol% der Diole, bevorzugt 95 mol% bis 100 mol% der Diole, besonders bevorzugt 98 mol% bis 100 mol% der Diole, noch bevorzugter 99 mol% bis 100 mol% der Diole der Komponente A ein Molekulargewicht von 62 g/mol bis 250 g/mol auf und am bevorzugtesten ist, dass die ein oder mehreren Diole der Komponente A alle ein Molekulargewicht von 62 g/mol bis 250 g/mol aufweisen.

Erfindungsgemäß werden ein oder mehrere difunktionelle Alkohole insbesondere aliphatische, araliphatische oder cycloaliphatische Diole mit Molekulargewichten von 62 g/mol bis 250 g/mol eingesetzt. Dies können beispielsweise sein 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, hydriertes Bisphenol A (2,2-Bis(4-hydroxycyclohexyl)propan), 1,3-Cycloheptandiol, 1,4-Cycloheptandiol, 2-Methyl-1,4-cycloheptandiol, 4-Methyl-1,3-cycloheptandiol, 4,4'-(1-Methylethyliden)-biscyclohexanol, 1,3-Cyclooctandiol, 1,4-Cyclooctandiol, 1,5-Cyclooctandiol, 5-Methyl-1,4-cyclooctandiol, 5-Ethyl-1,4-cyclooctandiol, 5-Propyl-1,4-cyclooctandiol und 5-Butyl-1,4-cyclooctandiol. Es können auch Gemische der oben genannten Alkohole eingesetzt werden. Die Diole und / oder desren Vorläuferverbindungen können aus fossilen oder biologischen Quellen gewonnen worden sein. Wenn im Rahmen der vorliegenden Erfindung von Komponente A gesprochen wird, kann es sich auch um ein Gemisch von mindestens zwei Komponenten A handeln oder um ein Gemisch von Komponente(n) A und nicht-reaktiv terminierten Prepolymeren. Vorzugsweise handelt es sich um eine Komponente A oder ein Gemisch von mindestens zwei Komponenten A.

In einer bevorzugten Ausführungsform werden als Komponente A ein oder mehrere aliphatische, cycloaliphatische und / oder araliphatische Diole, vorzugsweise ein oder mehrere aliphatische oder cycloaliphatische Diole, besonders bevorzugt ein oder mehrere aliphatische Diole mit einem Molekulargewicht von 62 g/mol bis 250 g/mol eingesetzt werden noch bevorzugter ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol und / oder Mischungen aus mindestens 2 hieraus. Vorzugsweise werden aliphatische oder cycloaliphatische Diole eingesetzt, ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol und / oder Mischungen aus mindestens 2 hieraus. Vorzugsweise werden als Komponente A aliphatische Diole eingesetzt, ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol und / oder Mischungen aus mindestens 2 hieraus, bevorzugt 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol und / oder Mischungen aus mindestens 2 hieraus, bevorzugter 1,2-Butandiol, 1,3-Butandiol, 1,4-Butandiol, 1,5-Pentandiol, 1,6-Hexandiol, und / oder Mischungen aus mindestens 2 hieraus, bevorzugter 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und/oder Mischungen aus mindestens 2 hieraus, noch bevorzugter 1,2-Ethandiol, 1,2-Propandiol, 1,3-Propandiol, 1,2-Butandiol, 1,3-Butandiol, 1,4-Butandiol, 1,5-Pentandiol, und / oder Mischungen aus mindestens 2 hieraus und noch mehr bevorzugt 1,2-Ethandiol, 1,2-Propandiol, 1,3-Propandiol, 1,2-Butandiol, 1,3-Butandiol, 1,4-Butandiol, insbesondere 1,4-Butandiol und / oder Mischungen aus mindestens 2 hieraus. Die Diole und / oder dessen Vorläuferverbindungen können aus fossilen oder biologischen Quellen gewonnen worden sein.

Vorzugsweise werden als Komponente A aliphatische, araliphatische oder cycloaliphatische Diole mit einem Molekulargewicht von 62 g/mol bis 250 g/mol, bevorzugter von 62 g/mol bis 150 g/mol, noch bevorzugter von 62 g/mol bis 120 g/mol eingesetzt. Vorzugsweise werden als Komponente A aliphatische oder cycloaliphatische Diole mit einem Molekulargewicht von 62 g/mol bis 250 g/mol, bevorzugter von 62 g/mol bis 150 g/mol, noch bevorzugter von 62 g/mol bis 120 g/mol eingesetzt. Die Diole und / oder dessen Vorläuferverbindungen können aus fossilen oder biologischen Quellen gewonnen worden sein.

Die erfindungsgemäß als Komponente B eingesetzten Diisocyanate umfassen aliphatische, cycloaliphatische und / oder araliphatische Diisocyanate. Dem Fachmann ist bewusst, dass die Gesamtreaktionsenthalpie bei der Umsetzung von einem aliphatischen, cycloaliphatischen und / oder araliphatischen Diisocyanat mit einem Diol höher ist als die Umsetzung von einem aromatischen Diisocyanat mit dem gleichen Diol. Daher kann als Komponente B auch eine Mischung von einem oder mehreren aliphatischen, cycloaliphatischen, aromatischen und / oder araliphatischen Diisocyanaten verwendet werden, solange die Gesamtreaktionsenthalpie über alle Verfahrensstufen im beanspruchten Bereich liegt. Sollte beispielsweise die Umsetzung eines Gemisches aus einem aliphatischen Diisocyanat und einem aromatischen Diisocyanat mit einem oder mehreren Diolen eine Gesamtreaktionsenthalpie über alle Verfahrensstufen aufweisen, die nicht im beanspruchten Bereich liegt, so weiß der Fachmann, dass beispielsweise durch Erhöhung des Gehalts an aliphatischen Diisocyanat und Erniedrigung des Gehalts an einem aromatischen Diisocyanat in dem Gemisch die gewünschte Gesamtreaktionsenthalpie so eingestellt werden kann, dass sie im beanspruchten Bereich liegt. In einer bevorzugten Ausführungsform werden aromatische Diisocyanate in Anteilen bis zu 2 mol% bezogen auf die Stoffmenge der Komponente B eingesetzt.

Als Komponente B eignen sich alle dem Fachmann bekannten aliphatischen, cycloaliphatischen, aromatischen oder araliphatischen Diisocyanate, insbesondere monomere Diisocyanate. Die Diisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin hergestellt, welches aus biologischen Quellen gewonnen wird. Geeignete Verbindungen sind vorzugsweise solche des Molekulargewichtsbereiches von ≥ 140 g/mol bis ≤ 400 g/mol, wobei es unerheblich ist, ob diese mittels Phosgenierung oder nach phosgenfreien Verfahren erhalten wurden. Wenn im Rahmen der vorliegenden Erfindung von Komponente B gesprochen wird, kann es sich auch um ein Gemisch von mindestens zwei Komponenten B handeln oder um ein Gemisch von Komponente(n) B und nicht-reaktiv terminierten Prepolymeren. Vorzugsweise handelt es sich um eine Komponente B oder ein Gemisch von mindestens zwei Komponenten B.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl),1,8-Diisocyanato-p-menthan, 1,3-Diisocyanato-adamantan und 1,3-Dimethyl-5,7-diisocyanatoadamantan.

Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Bevorzugt werden aliphatische und cycloaliphatische Diisocyanate mit einem Molekulargewicht von ≥ 140 g/mol bis ≤ 400 g/mol eingesetzt, insbesondere aliphatische und cycloaliphatische Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und / oder Mischungen aus mindestens 2 hieraus. In einer anderen bevorzugten Ausführungsform werden Diisocyanate eingesetzt, ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 1,8-Diisocyanatooctan, 1,10-Diisocyanatodecan, 1,3- und 1,4-Diisocyanatocyclohexan, 1,3-Diisocyanato-2-methylcyclohexan, 1-Isocyanato-3,3,5-trimethyl-5-isocyanatomethyl-cyclohexan (Isophorondiisocyanat; IPDI) und / oder Mischungen aus mindestens 2 hieraus, noch bevorzugter 1,4-Diisocyanatobutan (BDI), 1,5-Diisocyanatopentan (PDI), 1,6-Diisocyanatohexan (HDI), 2-Methyl-1,5-diisocyanatopentan und / oder Mischungen aus mindestens 2 hieraus und noch mehr bevorzugter 1,4-Diisocyanatobutan (BDI), 1,5-Diisocyanatopentan (PDI), 1,6-Diisocyanatohexan (HDI) und / oder Mischungen aus mindestens 2 hieraus.

Unter Polyisocyanaten werden in diesem Zusammenhang organische Verbindungen mit mehr als zwei Isocyanatgruppen verstanden, wobei es unerheblich ist, ob diese mittels Phosgenierung oder nach phosgenfreien Verfahren erhalten wurden. Beispiele für geeignete Polyisocyanate sind Triphenylmethan- 4,4',4"-triisocyanat oder 4-Isocyanatomethyl-1,8-octandiisocyanat (TIN). Insbesondere können auch Derivate der unten genannten aliphatischen, cycloaliphatischen und / oder araliphatischen Diisocyanate verwendet werden. Beispiele dafür sind die handelsüblichen Trimere (Biurete, Allophanate oder Isocyanurate) von 1,4-Diisocyanatobutan (BDI), 1,5-Diisocyanatopentan (PDI), 1,6-Diisocyanatohexan (HDI), 1-Isocyanato-3,3,5-trimethyl-5-isocyanatomethyl-cyclohexan oder 2,4'- und 4,4'-Diisocyanatodicyclohexylmethan. Diese Polyisocyanate können bis zu einer Menge zugesetzt werden, bei der die thermoplastischen Eigenschaften des Endproduktes erhalten bleiben.

In einer bevorzugten Ausführungsform enthält Komponente B keine aromatischen Diisocyanate, Polyisocyanate und / oder Derivate hiervon.

Zur Herstellung der thermoplastischen Polyurethane können die Komponenten A, B und die verschiedenen Prepolymere (Hydroxy-terminierte Prepolymere, NCO-terminierte Prepolymere, nicht-reaktiv terminierte Prepolymere) im erfindungsgemäßen Verfahren gegebenenfalls in Gegenwart von einem oder mehreren Katalysatoren, Hilfs- und / oder Zusatzstoffen umgesetzt werden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 Gew.-%bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente B eingesetzt. Der Katalysator kann in Substanz eingesetzt werden oder gelöst in der Diol-Komponente A. Ein Vorteil ist hierbei, dass die dann erhaltenen thermoplastischen Polyurethane keine Verunreinigungen durch gegebenenfalls mitverwendete Katalysatorlösungsmittel enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β -Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch beim erfindungsgemäßen Verfahren Katalysatorlösungsmittel zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Neben den Komponenten A und B sowie den Katalysatoren können auch Hilfsmittel und / oder Zusatzstoffe eingesetzt werden. Dabei kann es sich beispielsweise um im Bereich der Thermoplasttechnologie gängige Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Zusatzstoffe mehrerer Typen zu verwenden.

In einer anderen bevorzugten Ausführungsform können als Zusatzstoffe in geringen Mengen auch übliche gegenüber Isocyanaten reaktive mono-, di-, tri- oder polyfunktionelle Verbindungen in Anteilen von 0,001 mol% bis zu 2 mol%, vorzugsweise von 0,002 mol% bis 1 mol%, bezogen auf die Gesamtstoffmenge der Komponente A, z. B. als Kettenabbrecher, Hilfsmittel oder Entformungshilfen, eingesetzt werden. Beispielhaft genannt seien Alkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol und Stearylalkohol. Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Ebenfalls geeignet sind Amine wie Butylamin und Stearylamin oder Thiole.

Im erfindungsgemäßen Verfahren wird in mindestens einer Stufe des mehrstufigen Verfahrens mindestens ein Hydroxy-terminiertes Prepolymer aus der Gesamtmenge oder einer ersten Teilmenge der Komponente A und einer ersten Teilmenge der Komponente B gebildet. Das mindestens eine Hydroxy-terminierte Prepolymer wird im erfindungsgemäßen Verfahren als prinzipiell isolierbares Zwischenprodukt erhalten, durch Polyaddition von Diol-Komponente A mit der Diisocyanat-Komponente B, wobei die Diol-Komponente A im Überschuss vorliegt. Die Polyaddition kann in Gegenwart der Komponenten C und D erfolgen.

Das mindestens eine NCO-terminierte Prepolymer und das mindestens eine nicht-reaktiv terminierte Prepolymer können als prinzipiell isolierbare Zwischenprodukte erhalten werden, durch Polyaddition der Komponenten A und B und gegebenenfalls des mindestens einen Kettenabbrechers. Die Polyaddition kann in Gegenwart der Komponenten C und D erfolgen.

Neben dem mindestens einen Hydroxy-terminierten Prepolymer können, abhängig von den verwendeten Zusatzstoffen, auch nicht-reaktiv terminierte Prepolymere erhalten werden, bzw. in Mischung mit den Hydroxy-terminierten Prepolymeren vorliegen. Die NCO-terminierten Prepolymere können ebenfalls als Gemisch mit den nicht-reaktiv terminierten Prepolymeren vorliegen. Die nicht-reaktiven Prepolymere sind aus den Komponenten A, B, gegebenenfalls C und D gebildet. Die nicht-reaktiven Prepolymere werden durch dem Fachmann bekannte Herstellverfahren gebildet. Die Herstellung der nicht-reaktiven Prepolymere kann in Gegenwart der Komponente C erfolgen. Vorzugsweise beträgt das Verhältnis der nicht-reaktiven Prepolymere zu den Hydroxy-terminierten Prepolymeren und / oder NCO-terminierten Prepolymeren < 20 : 80 Gew.-%, vorzugsweise < 10 : 90 Gew.-% jeweils bezogen auf das Gesamtgewicht aller Hydroxy-terminierten Prepolymere und / oder NCO-terminierten Prepolymere. Das gezielte Zumischen von nicht-reaktiv terminierten Prepolymeren zu dem mindestens einen Hydroxy-terminierten Prepolymer hat dabei den Vorteil, dass die bei der darauffolgenden Umsetzung des mindestens einen Hydroxy-terminierten Prepolymers mit einer weiteren Teilmenge an Komponente B oder mit dem wenigstens einen NCO-terminierten Prepolymer auftretende Reaktionswärme besser kontrolliert werden kann. Weiterhin kann durch die Beimischung der nicht-reaktiv terminierten Prepolymere die Molekulargewichtsverteilung des gesamten erfindungsgemäßen Polyurethans beeinflusst werden.

In einer bevorzugten Ausführungsform des erfindungsgemäßen Verfahrens wird das mindestens eine Hydroxy-terminierte Prepolymer durch Polyaddition von mindestens einer Kombinationen aus Komponente A und Komponente B gebildet ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,4-Diisocyanatobutan mit 1,7-Heptandiol, 1,4-Diisocyanatobutan mit 1,8-Octandiol, 1,4-Diisocyanatobutan mit 1,9-Nonandiol, 1,4-Diisocyanatobutan mit 1,10-Decandiol, 1,4-Diisocyanatobutan mit 1,3-Cyclobutandiol, 1,4-Diisocyanatobutan mit 1,3-Cyclopentandiol, 1,4-Diisocyanatobutan mit 1,2-, 1,3- und 1,4-Cyclohexandiol und / oder Mischungen aus mindestens 2 Isomeren, 1,4-Diisocyanatobutan mit 1,4-Cyclohexandimethanol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,5-Diisocyanatopentan mit 1,6-Hexandiol, 1,5-Diisocyanatopentan mit 1,7-Heptandiol, 1,5-Diisocyanatopentan mit 1,8-Octandiol, 1,5-Diisocyanatopentan mit 1,3-Cyclobutandiol, 1,5-Diisocyanatopentan mit 1,3-Cyclopentandiol, 1,5-Diisocyanatopentan mit 1,2-, 1,3- und 1,4-Cyclohexandiol und / oder Mischungen aus mindestens 2 Isomeren, 1,5-Diisocyanatopentan mit 1,4-Cyclohexandimethanol, 1,6-Diisocyanatohexan mit 1,2-Ethandiol, 1,6-Diisocyanatohexan mit 1,2- und / oder 1,3-Propandiol, 1,6-Diisocyanatohexan mit 1,2-, 1,3- und / oder 1,4-Butandiol, 1,6-Diisocyanatohexan mit 1,5-Pentandiol, 1,6-Diisocyanatohexan mit 1,6-Hexandiol, 1,6-Diisocyanatohexan mit 1,7-Heptandiol, 1-Isocyanato-3,3,5-trimethyl-5-isocyanatomethyl-cyclohexan mit 1,2-Ethandiol und 1-Isocyanato-3,3,5-trimethyl-5-isocyanatomethyl-cyclohexan mit 1,2- und / oder 1,3-Propandiol. In einer bevorzugten Ausführungsform des erfindungsgemäßen Verfahrens wird das mindestens eine Hydroxy-terminierte Prepolymer durch Polyaddition von mindestens einer Kombinationen aus Komponente A und Komponente B gebildet ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,4-Diisocyanatobutan mit 1,7-Heptandiol, 1,4-Diisocyanatobutan mit 1,8-Octandiol, 1,4-Diisocyanatobutan mit 1,3-Cyclobutandiol, 1,4-Diisocyanatobutan mit 1,3-Cyclopentandiol, 1,4-Diisocyanatobutan mit 1,2-, 1,3- und 1,4-Cyclohexandiol und / oder Mischungen aus mindestens 2 Isomeren, 1,4-Diisocyanatobutan mit 1,4-Cyclohexandimethanol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,5-Diisocyanatopentan mit 1,6-Hexandiol, 1,5-Diisocyanatopentan mit 1,7-Heptandiol, 1,6-Diisocyanatohexan mit 1,2-Ethandiol, 1,6-Diisocyanatohexan mit 1,2- und / oder 1,3-Propandiol, 1,6-Diisocyanatohexan mit 1,2-, 1,3- und / oder 1,4-Butandiol, 1,6-Diisocyanatohexan mit 1,5-Pentandiol und 1,6-Diisocyanatohexan mit 1,6-Hexandiol, noch bevorzugter ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2- und / oder 1,3-Propandiol, 1,6-Diisocyanatohexan mit 1,2-, 1,3- und / oder 1,4-Butandiol und 1,6-Diisocyanatohexan mit 1,5-Pentandiol, noch mehr bevorzugt ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und / oder 1,3-Propandiol und 1,6-Diisocyanatohexan mit 1,2-, 1,3- und / oder 1,4-Butandiol. In einer weiteren bevorzugten Ausführungsform des erfindungsgemäßen Verfahrens wird das mindestens eine Hydroxy-terminierte Prepolymer durch Polyaddition von mindestens einer Kombinationen aus Komponente A und Komponente B gebildet ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,6-Diisocyanatohexan mit 1,2-Ethandiol, 1,6-Diisocyanatohexan mit 1,2- und / oder 1,3-Propandiol und 1,6-Diisocyanatohexan mit 1,2-, 1,3- und / oder 1,4-Butandiol.

Ebenfalls Gegenstand der Erfindung sind thermoplastische Polyurethane, erhältlich nach dem erfindungsgemäßen Verfahren.

In einer bevorzugten Ausführungsform weist das thermoplastische Polyurethanpolymer einen Anteil von Komponente B von 30 Gew.-% bis 80 Gew.-% bevorzugt von 40 Gew.-% bis 75 Gew.-%, besonders bevorzugt von 50 Gew.-% bis 70 Gew.-%, ganz besonders bevorzugt von 55 Gew.-% bis 70 Gew.% auf.

In einer bevorzugten Ausführungsform weist das thermoplastische Polyurethanpolymer einen Anteil an Urethangruppen von 4,0 mol/kg bis 10,0 mol/kg Polymer, bevorzugt von 6,0 mol/kg bis 9,0 mol/kg Polymer, besonders bevorzugt von 6,5 mol/kg bis 9,0 mol/kg Polymer, ganz besonders bevorzugt von 7,0 mol/kg bis 9,0 mol/kg Polymer auf. Der Anteil an Urethangruppen wird dabei rechnerisch aus dem Molekulargewicht der Wiederholeinheit bestimmt.

In einer weiteren bevorzugten Ausführungsform wird das thermoplastische Polyurethanpolymer aus dem erfindungsgemäßen Verfahren durch Reaktion einer Diisocyanatkomponente mit 98 Gew.-% bis 100 Gew.-% aliphatischen Diisocyanaten und mindestens einem aliphatischen und / oder cycloaliphatischen Diol mit einem Molekulargewicht von 62 g/mol bis 250 g/mol erhalten. Bevorzugt enthält die Diisocyanatkomponente nur aliphatische Diisocyanate.

In einer weiteren bevorzugten Ausführungsform wird das thermoplastische Polyurethanpolymer aus dem erfindungsgemäßen Verfahren durch Reaktion einer Diisocyanatkomponente B enthaltend 98 Gew.-% bis 100 Gew.-% lineare aliphatische Diisocyanate und einer Diolkomponente A enthaltend 98 Gew.-% bis 100 Gew.-% lineare aliphatische Diole mit einem Molekulargewicht von 62 g/mol bis 250 g/mol hergestellt. Besonders bevorzugt ist ein Polyurethanpolymer, hergestellt aus einer Komponente B enthaltend 98 Gew.-% bis 100 Gew.-% eines Diisocyanats bezogen auf die Gesamtmenge der Komponente B ausgewählt aus der Gruppe bestehend aus 1,6-Hexamethylendiisocyanat, 1,5-Pentamethylendiisocyanat, 1,4-Butandiisocyanat und / oder einer Mischung aus mindestens 2 hiervon und einer Komponente A enthaltend 98 Gew.-% bis 100 Gew.-% eines Diols bezogen auf die Gesamtmenge der Komponente A ausgewählt aus der Gruppe bestehend aus 1,4-Butandiol, 1,6-Hexandiol, 1,5-Pentandiol, 1,3-Propandiol, 1,2-Ethandiol und / oder einer Mischung aus mindestens 2 hiervon. Ganz besonders bevorzugt ist ein Polyurethanpolymer, hergestellt aus einer Komponente B enthaltend 98 Gew.-% bis 100 Gew.-% eines Diisocyanats bezogen auf die Gesamtmenge der Komponente B ausgewählt aus der Gruppe bestehend aus 1,6-Hexamethylendiisocyanat, 1,5-Pentamethylendiisocyanat und / oder einer Mischung aus mindestens 2 hiervon und einer Komponente A enthaltend 98 Gew.-% bis 100 Gew.-% eines Diols bezogen auf die Gesamtmenge der Komponente A ausgewählt aus der Gruppe bestehend aus 1,4-Butandiol, 1,6-Hexandiol, 1,5-Pentandiol, 1,3-Propandiol, 1,2-Ethandiol und / oder einer Mischung aus mindestens 2 hiervon.

In einer ganz besonders bevorzugten Ausführungsform wird das thermoplastische Polyurethanpolymer aus dem erfindungsgemäßen Verfahren durch Reaktion einer Diisocyanatkomponente B enthaltend 98 Gew.-% bis 100 Gew.-% lineare aliphatische Diisocyanate bezogen auf die Gesamtmenge der Komponente B und einer Diolkomponente A enthaltend 98 Gew.-% bis 100 Gew.-% lineare aliphatische Diole mit einem Molekulargewicht von 62 g/mol bis 250 g/mol bezogen auf die Gesamtmenge der Komponente A erhalten. Besonders bevorzugt ist ein Polyurethanpolymer, welches aus einer Komponente B enthaltend 98 Gew.-% bis 100 Gew.-% 1,6-Hexamethylendiisocyanat bezogen auf die Gesamtmenge der Komponente B und einer Komponente A enthaltend 98 Gew.-% bis 100 Gew.-% 1,4-Butandiol bezogen auf die Gesamtmenge der Komponente A, erhalten wurde.

In einer bevorzugten Ausführungsform hat das Produkt aus dem erfindungsgemäßen Verfahren im CIE-Lab Farbenraum einen L*-Wert von > 70 und einen b*-Wert von < 3, bevorzugt einen L*-Wert von > 75 und einen b*-Wert von < 2, besonders bevorzugt einen L*-Wert von > 80 und einen b*-Wert von < 1,5. Die Farbwerte werden mit einem Konica Minolta CM5 Spektralphotometer, mit der Lichtart D 65, bei 10° Beobachter gemäß DIN EN ISO 11664-1 (Juli 2011) bestimmt.

Insbesondere sind die folgenden Ausführungsformen bevorzugt:

1. Kontinuierliches lösungsmittelfreies mehrstufiges Verfahren zur Herstellung von thermoplastischen Polyurethanen durch Umsetzung der Komponenten

A) ein oder mehrere Diole,

B) ein oder mehrere Diisocyanate, umfassend aliphatische, cycloaliphatische und / oder araliphatische Diisocyanate,

C) gegebenenfalls einem oder mehreren Katalysatoren, und

D) gegebenenfalls weiterer Hilfs- oder Zusatzstoffe,

wobei mindestens ein Diol der Komponente A ein Molekulargewicht von 62 g/mol bis 250 g/mol aufweist, wobei in mindestens einer Verfahrensstufe des mehrstufigen Verfahrens mindestens ein Hydroxy-terminiertes Prepolymer aus der Gesamtmenge oder einer ersten Teilmenge der Komponente A und einer ersten Teilmenge der Komponente B gebildet wird, wobei die Summe aller Teilmengen der Komponente A bzw. die Summe aller Teilmengen der Komponente B über alle Verfahrensstufen des Mehrstufenverfahrens zusammen die Gesamtmenge der eingesetzten Komponente A bzw. Komponente B ist, dadurch gekennzeichnet, dass die Komponenten A und B so ausgewählt werden, dass wenn man sie in einem molaren Verhältnis von 1,0 : 1,0 umsetzt die Gesamtreaktionsenthalpie über alle Verfahrensstufen von -900 kJ/kg bis -500 kJ/kg beträgt, bestimmt gemäß DIN 51007:1994-06.

2. Kontinuierliches lösungsmittelfreies mehrstufiges Verfahren nach Ausführungsform 1, dadurch gekennzeichnet, dass die Gesamtreaktionsenthalpie gemäß DIN 51007 Juni 1994 bestimmt wird, indem 20 mg - 30 mg einer Mischung von Komponente A und Komponente B in einer gasdicht versiegelten Glasampulle mit 3 K/min von -50 °C bis +450 °C erwärmt, die Differenz zwischen der Temperatur der Mischung und der Temperatur einer inerten Referenz aus Aluminiumoxid mittels Thermoelementen bestimmt wird und Komponente A und Komponente B in der Mischung in einem molaren Verhältnis von 1,0 : 1,0 vorliegen.

3. Kontinuierliches lösungsmittelfreies mehrstufiges Verfahren nach einer der vorhergehenden Ausführungsformen, dadurch gekennzeichnet, dass in mindestens einer Verfahrensstufe ein Teil der entstehenden Gesamtreaktionsenthalpie, vorzugsweise von 25 % bis 98 %, besonders bevorzugt von 30 % bis 95 % und noch bevorzugter von 35 % bis 90 % und ganz besonders bevorzugt von 40 % bis 85 % der Gesamtreaktionsenthalpie abgeführt wird.

4. Kontinuierliches lösungsmittelfreies mehrstufiges Verfahren nach einer der vorhergehenden Ausführungsformen, dadurch gekennzeichnet, dass die Gesamtreaktionsenthalpie über alle Verfahrensstufen im Bereich von -900 kJ/kg bis -550 kJ/kg, vorzugsweise im Bereich von -900 kJ/kg bis -580 kJ/kg, bevorzugter im Bereich von -900 kJ/kg bis -600 kJ/kg, noch bevorzugter im Bereich von -900 kJ/kg bis -650 kJ/kg ist.

5. Kontinuierliches lösungsmittelfreies mehrstufiges Verfahren nach einer der vorhergehenden Ausführungsformen, dadurch gekennzeichnet, dass insgesamt ein molares Verhältnis von Komponente A zu Komponente B von 1,0 : 0,95 bis 0,95 : 1,0 vorliegt.

6. Kontinuierliches lösungsmittelfreies mehrstufiges Verfahren nach einer der vorhergehenden Ausführungsformen, dadurch gekennzeichnet, dass die mittlere Verweilzeit in der mindestens einen Verfahrensstufe zur Herstellung des Hydroxy-terminierten Prepolymers zwischen 5 Sekunden und 90 Minuten, bevorzugt zwischen 10 Sekunden und 60 Minuten, besonders bevorzugt zwischen 30 Sekunden und 30 Minuten beträgt jeweils bezogen auf eine Verfahrensstufe.

7. Kontinuierliches lösungsmittelfreies mehrstufiges Verfahren nach einer der vorhergehenden Ausführungsformen, dadurch gekennzeichnet, dass das mindestens eine Hydroxy-terminierte Prepolymer in mindestens einer Verfahrensstufe aus der Gesamtmenge der Komponente A und einer ersten Teilmenge der Komponente B gebildet wird, vorzugsweise wobei die erste Teilmenge der Komponente B von 40 % bis 95 %, bevorzugt von 60 % bis 95 %, bevorzugter von 75 % bis 93 % beträgt jeweils bezogen auf die molare Gesamtmenge der im Verfahren eingesetzten Komponente B.

8. Kontinuierliches lösungsmittelfreies mehrstufiges Verfahren nach einer der vorhergehenden Ausführungsformen, dadurch gekennzeichnet, dass das mindestens eine Hydroxy-terminierte Prepolymer in mindestens einer Verfahrensstufe aus einer ersten Teilmenge der Komponente A und einer ersten Teilmenge der Komponente B gebildet wird, wobei das molare Verhältnis der eingesetzten Teilmengen von Komponente B zu Komponente A von 0,65 : 1,0 bis 0,98 : 1,0, vorzugsweise von 0,70 : 1,0 bis 0,97 : 1,0, bevorzugter von 0,75 : 1,0 bis 0,96 : 1,0 und ganz besonders bevorzugt 0,75 : 1,0 bis 0,95 : 1,0 beträgt und wobei als erste Teilmenge A mindestens 50 %, vorzugsweise 70 % noch bevorzugter 90 % bezogen auf die molare Gesamtmenge der im Verfahren eingesetzten Komponente A eingesetzt wird.

9. Kontinuierliches lösungsmittelfreies mehrstufiges Verfahren nach einer der vorhergehenden Ausführungsformen, dadurch gekennzeichnet, dass das mindestens eine Hydroxy-terminierte Prepolymer eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 aufweist jeweils bezogen auf die Stoffmenge der gesamten Prepolymer-Mischung.

10. Kontinuierliches lösungsmittelfreies mehrstufiges Verfahren nach einer der vorhergehenden Ausführungsformen, dadurch gekennzeichnet, dass in mindestens einer weiteren auf die Bildung des mindestens einen Hydroxy-terminierten Prepolymers folgenden Verfahrensstufe, das mindestens eine Hydroxy-terminierte Prepolymer mit einer weiteren Teilmenge der Komponente B zum thermoplastischen Polyurethan umgesetzt wird, vorzugsweise wobei die weitere Teilmenge der Komponente B von 5 % bis 60 %, bevorzugt von 5 % bis 40 %, bevorzugter von 7 % bis 25 % beträgt jeweils bezogen auf die molare Gesamtmenge der im Verfahren eingesetzten Komponente B, mit der Maßgabe, dass die Summe aller Teilmengen der Komponente B über alle Verfahrensstufen des Mehrstufenverfahrens zusammen die molare Gesamtmenge der eingesetzten Komponente B ist.

11. Kontinuierliches lösungsmittelfreies mehrstufiges Verfahren nach einer der vorhergehenden Ausführungsformen, dadurch gekennzeichnet, dass in mindestens einer weiteren auf die Bildung des mindestens einen Hydroxy-terminierten Prepolymers folgenden Verfahrensstufe, das mindestens eine Hydroxy-terminierte Prepolymer mit einer zweiten Teilmenge der Komponente B und einer zweiten Teilmenge der Komponente A zum thermoplastischen Polyurethan umgesetzt, mit der Maßgabe, dass die Summe aller Teilmengen der Komponente A und die Summe aller Teilmengen der Komponente B über alle Verfahrensstufen des Mehrstufenverfahrens zusammen die molare Gesamtmenge der eingesetzten Komponente A bzw. Komponente B ist.

12. Kontinuierliches lösungsmittelfreies mehrstufiges Verfahren nach einer der vorhergehenden Ausführungsformen, dadurch gekennzeichnet, dass das mindestens eine Hydroxy-terminierte Prepolymer in mindestens einer Verfahrensstufe aus einer ersten Teilmenge der Komponente A und einer ersten Teilmenge der Komponente B gebildet wird, und das in mindestens einer weiteren auf die Bildung des Hydroxy-terminierten Prepolymers folgenden Verfahrensstufe, das mindestens eine Hydroxy-terminierte Prepolymer mit mindestens einem NCO-terminierten Prepolymer zum thermoplastischen Polyurethan umgesetzt wird, wobei das mindestens eine NCO-terminierte Prepolymer in mindestens einer weiteren Verfahrensstufe aus einer zweiten Teilmenge der Komponente A und einer zweiten Teilmenge der Komponente B gebildet wird.

13. Kontinuierliches lösungsmittelfreies mehrstufiges Verfahren nach Ausführungsform 12, dadurch gekennzeichnet, dass das mindestens eine Hydroxy-terminierte Prepolymer und das mindestens eine NCO-terminierten Prepolymer in einem molaren Verhältnis von 1,0 : 0,95 bis 0,95 : 1,0, bevorzugt in einem molaren Verhältnis von 1,0 : 0,98 bis 0,98 : 1,0 umgesetzt werden.

14 Kontinuierliches lösungsmittelfreies mehrstufiges Verfahren nach einer der vorhergehenden Ausführungsformen, dadurch gekennzeichnet, dass das mindestens eine Hydroxy-terminierte Prepolymer in mindestens einer ersten Verfahrensstufe hergestellt und in mindestens einer zweiten Verfahrensstufe mit einer zweiten Teilmenge der Komponente B, Komponente A und / oder dem mindestens einen NCO-terminierten Prepolymer zum thermoplastischen Polyurethan umgesetzt wird, wobei die erste Verfahrensstufe unterschiedliche Reaktionsbedingungen bezüglich Temperatur, Druck und / oder Scherrate im Vergleich zu der mindestens zweiten Verfahrensstufe aufweisen kann und die Verfahrensstufen miteinander über mindestens eine Stoff transportierende Leitung verbunden sind, vorzugsweise wobei das mindestens eine NCO-terminierte Prepolymer in einer dritten Verfahrensstufe hergestellt wird, die von der mindestens einen ersten und zweiten Verfahrensstufe getrennt ist und unterschiedliche Reaktionsbedingungen bezüglich Temperatur, Druck und Scherrate im Vergleich zu der mindesten einen ersten und zweiten Verfahrensstufe aufweist und mit der mindestens einen ersten oder zweiten Verfahrensstufe über mindestens eine Stoff transportierende Leitung verbunden ist.

15. Kontinuierliches lösungsmittelfreies mehrstufiges Verfahren nach einer der vorhergehenden Ausführungsformen, dadurch gekennzeichnet, dass die mittlere Verweilzeit in der Verfahrensstufe zur Bildung des thermoplastischen Polyurethans aus dem mindestens einen Hydroxy-terminierten Prepolymer von 5 Sekunden bis 60 Minuten, bevorzugt von 30 Sekunden bis 60 Minuten, besonders bevorzugt von 1 Minute bis 50 Minuten und ganz besonders bevorzugt von 10 Minuten bis 50 Minuten beträgt.

16. Kontinuierliches lösungsmittelfreies mehrstufiges Verfahren nach einer der vorhergehenden Ausführungsformen, dadurch gekennzeichnet, dass ein Gesamtdurchsatz an Polyurethanpolymer von mindestens 0,5 kg/h, bevorzugt von 2 kg/h, besonders bevorzugt von mindestens 100 kg/h und ganz besonders bevorzugt von mindestens 1000 kg/h erreicht wird.

17. Kontinuierliches lösungsmittelfreies mehrstufiges Verfahren nach einer der vorhergehenden Ausführungsformen, wobei das Verfahren die folgenden Schritte umfasst:

i) kontinuierliches Vermischen der Gesamtmenge oder einer ersten Teilmenge der Komponente A mit einer ersten Teilmenge der Komponente B und gegebenenfalls der Komponenten C und / oder D,

ii) kontinuierliches Reagieren lassen der Mischung aus Schritt i) in mindestens einer ersten Verfahrensstufe unter Bildung des mindestens einen Hydroxy-terminierten Prepolymers, wobei die Temperatur der Reaktionsmischung in der mindestens einen ersten Verfahrensstufe unterhalb der Zersetzungstemperatur des mindestens einen Hydroxy-terminierten Prepolymers gehalten wird,

iii) kontinuierliches Überführen des in Schritt ii) gebildeten mindestens einen Hydroxy-terminierten Prepolymers in eine zweite Verfahrensstufe, wobei die zweite Verfahrensstufe durch mindestens eine Stofftransportleitung mit der ersten Verfahrensstufe verbunden ist,

iv) gegebenenfalls kontinuierliches Vermischen und Reagieren lassen der verbleibenden Teilmengen der Komponenten A und B in einer dritten Verfahrensstufe, um mindestens ein NCO-terminiertes Prepolymer herzustellen, wobei die Temperatur der Reaktionsmischung in der dritten Verfahrensstufe unterhalb der Zersetzungstemperatur des mindestens einen NCO-terminierten Prepolymers gehalten wird, wobei die dritte Verfahrensstufe mit der ersten und / oder zweiten Verfahrensstufe über mindestens eine Stofftransportleitung verbunden ist,

v) kontinuierliches Vermischen des mindestens einen Hydroxy-terminierten Prepolymers mit der verbleibenden Teilmenge der Komponente B und gegebenenfalls mit der verbleibenden Teilmenge der Komponente A und / oder dem mindestens einen NCO-terminierten Prepolymer aus Schritt iv),

vi) kontinuierliches Reagieren lassen der Mischung aus Schritt v) unter Erhalt des thermoplastischen Polyurethans, wobei die Temperatur der Reaktionsmischung in der Verfahrensstufe unterhalb der Zersetzungstemperatur des thermoplastischen Polyurethans gehalten wird,

vii) kontinuierliches Abkühlen und Granulieren des thermoplastischen Polyurethans.

18. Kontinuierliches lösungsmittelfreies mehrstufiges Verfahren nach einer der vorhergehenden Ausführungsformen, dadurch gekennzeichnet, dass 90 mol% bis 100 mol% der Diole, bevorzugt 95 mol% bis 100 mol% der Diole, besonders bevorzugt 98 mol% bis 100 mol% der Diole, noch bevorzugter 99 mol% bis 100 mol% der Diole der Komponente A ein Molekulargewicht von 62 g/mol bis 250 g/mol aufweisen und am bevorzugtesten, dass die ein oder mehreren Diole der Komponente A alle ein Molekulargewicht von 62 g/mol bis 250 g/mol aufweisen.

19 Kontinuierliches lösungsmittelfreies mehrstufiges Verfahren nach einer der vorhergehenden Ausführungsformen, dadurch gekennzeichnet, dass die ein oder mehreren Diole der Komponente A alle ein Molekulargewicht von 62 g/mol bis 250 g/mol, vorzugsweise ein Molekulargewicht von 62 g/mol bis 150 g/mol, besonders bevorzugt ein Molekulargewicht von 62 g/mol bis 120 g/mol aufweisen.

20. Kontinuierliches lösungsmittelfreies mehrstufiges Verfahren nach einer der vorhergehenden Ausführungsformen, dadurch gekennzeichnet, dass als Komponente A ein oder mehrere aliphatische, cycloaliphatische und / oder araliphatische Diole, vorzugsweise ein oder mehrere aliphatische oder cycloaliphatische Diole, besonders bevorzugt ein oder mehrere aliphatische Diole mit einem Molekulargewicht von 62 g/mol bis 250 g/mol eingesetzt werden noch bevorzugter ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, und / oder Mischungen aus mindestens 2 hieraus.

21. Kontinuierliches lösungsmittelfreies mehrstufiges Verfahren nach einer der vorhergehenden Ausführungsformen, dadurch gekennzeichnet, dass als Komponente A aliphatische oder cycloaliphatische Diole eingesetzt werden, ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol und / oder Mischungen aus mindestens 2 hieraus, vorzugsweise werden als Komponente A aliphatische Diole eingesetzt, ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol und / oder Mischungen aus mindestens 2 hieraus, bevorzugt 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol und / oder Mischungen aus mindestens 2 hieraus, bevorzugter 1,2-Butandiol, 1,3-Butandiol, 1,4-Butandiol, 1,5-Pentandiol, 1,6-Hexandiol, und / oder Mischungen aus mindestens 2 hieraus, bevorzugter 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und / oder Mischungen aus mindestens 2 hieraus, noch bevorzugter 1,2-Ethandiol, 1,2-Propandiol, 1,3-Propandiol, 1,2-Butandiol, 1,3-Butandiol, 1,4-Butandiol, 1,5-Pentandiol, und / oder Mischungen aus mindestens 2 hieraus und noch mehr bevorzugt 1,2-Ethandiol, 1,2-Propandiol, 1,3-Propandiol, 1,2-Butandiol, 1,3-Butandiol, 1,4-Butandiol, insbesondere 1,4-Butandiol und / oder Mischungen aus mindestens 2 hieraus.

22. Kontinuierliches lösungsmittelfreies mehrstufiges Verfahren nach einer der vorhergehenden Ausführungsformen, dadurch gekennzeichnet, dass als Komponente B ein oder mehrere aliphatische oder cycloaliphatische Diisocyanate eingesetzt werden, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und / oder Mischungen aus mindestens 2 hieraus.

23. Kontinuierliches lösungsmittelfreies mehrstufiges Verfahren nach einer der vorhergehenden Ausführungsformen, dadurch gekennzeichnet, dass als Komponente B aliphatische und cycloaliphatische Diisocyanate mit einem Molekulargewicht von ≥ 140 g/mol bis ≤ 400 g/mol eingesetzt werden.

24. Kontinuierliches lösungsmittelfreies mehrstufiges Verfahren nach einer der vorhergehenden Ausführungsformen, dadurch gekennzeichnet, dass die Komponente B aromatische Diisocyanate in Anteilen bis zu 2 mol% bezogen auf die Gesamtstoffmenge der Komponente B enthält.

25. Kontinuierliches lösungsmittelfreies mehrstufiges Verfahren nach einer der vorhergehenden Ausführungsformen, dadurch gekennzeichnet, dass als Komponente B Diisocyanate eingesetzt werden, ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 1,8-Diisocyanatooctan, 1,10-Diisocyanatodecan, 1,3- und 1,4-Diisocyanatocyclohexan, 1,3-Diisocyanato-2-methylcyclohexan, 1-Isocyanato-3,3,5-trimethyl-5-isocyanatomethyl-cyclohexan (Isophorondiisocyanat; IPDI) und / oder Mischungen aus mindestens 2 hieraus, noch bevorzugter 1,4-Diisocyanatobutan (BDI), 1,5-Diisocyanatopentan (PDI), 1,6-Diisocyanatohexan (HDI), 2-Methyl-1,5-diisocyanatopentan und / oder Mischungen aus mindestens 2 hieraus und noch mehr bevorzugter 1,4-Diisocyanatobutan (BDI), 1,5-Diisocyanatopentan (PDI), 1,6-Diisocyanatohexan (HDI) und / oder Mischungen aus mindestens 2 hieraus.

26. Kontinuierliches lösungsmittelfreies mehrstufiges Verfahren nach einer der vorhergehenden Ausführungsformen, dadurch gekennzeichnet, dass das mindestens eine Hydroxy-terminierte Prepolymer durch Polyaddition von mindestens einer Kombinationen aus Komponente A und Komponente B gebildet wird ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,4-Diisocyanatobutan mit 1,7-Heptandiol, 1,4-Diisocyanatobutan mit 1,8-Octandiol, 1,4-Diisocyanatobutan mit 1,9-Nonandiol, 1,4-Diisocyanatobutan mit 1,10-Decandiol, 1,4-Diisocyanatobutan mit 1,3-Cyclobutandiol, 1,4-Diisocyanatobutan mit 1,3-Cyclopentandiol, 1,4-Diisocyanatobutan mit 1,2-, 1,3- und 1,4-Cyclohexandiol und / oder Mischungen aus mindestens 2 Isomeren, 1,4-Diisocyanatobutan mit 1,4-Cyclohexandimethanol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,5-Diisocyanatopentan mit 1,6-Hexandiol, 1,5-Diisocyanatopentan mit 1,7-Heptandiol, 1,5-Diisocyanatopentan mit 1,8-Octandiol, 1,5-Diisocyanatopentan mit 1,3-Cyclobutandiol, 1,5-Diisocyanatopentan mit 1,3-Cyclopentandiol, 1,5-Diisocyanatopentan mit 1,2-, 1,3- und 1,4-Cyclohexandiol und / oder Mischungen aus mindestens 2 Isomeren, 1,5-Diisocyanatopentan mit 1,4-Cyclohexandimethanol, 1,6-Diisocyanatohexan mit 1,2-Ethandiol, 1,6-Diisocyanatohexan mit 1,2- und / oder 1,3-Propandiol, 1,6-Diisocyanatohexan mit 1,2-, 1,3- und / oder 1,4-Butandiol, 1,6-Diisocyanatohexan mit 1,5-Pentandiol, 1,6-Diisocyanatohexan mit 1,6-Hexandiol, 1,6-Diisocyanatohexan mit 1,7-Heptandiol, 1-Isocyanato-3,3,5-trimethyl-5-isocyanatomethyl-cyclohexan mit 1,2-Ethandiol und 1-Isocyanato-3,3,5-trimethyl-5-isocyanatomethyl-cyclohexan mit 1,2- und / oder 1,3-Propandiol, vorzugsweise ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,4-Diisocyanatobutan mit 1,7-Heptandiol, 1,4-Diisocyanatobutan mit 1,8-Octandiol, 1,4-Diisocyanatobutan mit 1,3-Cyclobutandiol, 1,4-Diisocyanatobutan mit 1,3-Cyclopentandiol, 1,4-Diisocyanatobutan mit 1,2-, 1,3- und 1,4-Cyclohexandiol und / oder Mischungen aus mindestens 2 Isomeren, 1,4-Diisocyanatobutan mit 1,4-Cyclohexandimethanol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,5-Diisocyanatopentan mit 1,6-Hexandiol, 1,5-Diisocyanatopentan mit 1,7-Heptandiol, 1,6-Diisocyanatohexan mit 1,2-Ethandiol, 1,6-Diisocyanatohexan mit 1,2- und / oder 1,3-Propandiol, 1,6-Diisocyanatohexan mit 1,2-, 1,3- und / oder 1,4-Butandiol, 1,6-Diisocyanatohexan mit 1,5-Pentandiol und 1,6-Diisocyanatohexan mit 1,6-Hexandiol, noch bevorzugter ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2-und / oder 1,3-Propandiol, 1,6-Diisocyanatohexan mit 1,2-, 1,3- und / oder 1,4-Butandiol und 1,6-Diisocyanatohexan mit 1,5-Pentandiol, noch mehr bevorzugt ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und / oder 1,3-Propandiol und 1,6-Diisocyanatohexan mit 1,2-, 1,3- und / oder 1,4-Butandiol und am bevorzugtesten aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,6-Diisocyanatohexan mit 1,2-Ethandiol, 1,6-Diisocyanatohexan mit 1,2- und / oder 1,3-Propandiol und 1,6-Diisocyanatohexan mit 1,2-, 1,3- und / oder 1,4-Butandiol.

27. Kontinuierliches lösungsmittelfreies mehrstufiges Verfahren nach einer der vorhergehenden Ausführungsformen, dadurch gekennzeichnet, dass das thermoplastische Polyurethanpolymer einen Anteil an Urethangruppen von 4,0 mol/kg bis 10,0 mol/kg Polymer, bevorzugt von 6,0 mol/kg bis 9,0 mol/kg Polymer, besonders bevorzugt von 6,5 mol/kg bis 9,0 mol/kg Polymer, ganz besonders bevorzugt von 7,0 mol/kg bis 9,0 mol/kg Polymer aufweist.

28. Kontinuierliches lösungsmittelfreies mehrstufiges Verfahren nach einer der vorhergehenden Ausführungsformen, dadurch gekennzeichnet, dass das thermoplastische Polyurethanpolymer durch Umsetzung einer Diisocyanatkomponente B enthaltend 98 Gew.-% bis 100 Gew.-% lineare aliphatische Diisocyanate bezogen auf die Gesamtmenge der Komponente B und einer Diolkomponente A enthaltend 98 Gew.-% bis 100 Gew.-% lineare aliphatische Diole mit einem Molekulargewicht von 62 g/mol bis 250 g/mol bezogen auf die Gesamtmenge der Komponente A erhalten wird.

29. Kontinuierliches lösungsmittelfreies mehrstufiges Verfahren nach einer der vorhergehenden Ausführungsformen, dadurch gekennzeichnet, dass das thermoplastische Polyurethanpolymer durch Umsetzung Komponente B enthaltend 98 Gew.-% bis 100 Gew.-% eines Diisocyanats bezogen auf die Gesamtmenge der Komponente B ausgewählt aus der Gruppe bestehend aus 1,6-Hexamethylendiisocyanat, 1,5-Pentamethylendiisocyanat, 1,4-Butandiisocyanat und / oder einer Mischung aus mindestens 2 hiervon und einer Komponente A enthaltend 98 Gew.-% bis 100 Gew.-% eines Diols bezogen auf die Gesamtmenge der Komponente A ausgewählt aus der Gruppe bestehend aus 1,4-Butandiol, 1,6-Hexandiol, 1,5-Pentandiol, 1,3-Propandiol, 1,2-Ethandiol und / oder einer Mischung aus mindestens 2 hiervon, erhalten wird

30. Thermoplastisches Polyurethan erhältlich aus dem kontinuierlichen lösungsmittelfreien mehrstufigen Verfahren nach einer der vorhergehenden Ausführungsformen.

31. Thermoplastisches Polyurethan nach Ausführungsform 30, dadurch gekennzeichnet, dass das thermoplastische Polyurethanpolymer einen Anteil an Urethangruppen von 4,0 mol/kg bis 10,0 mol/kg Polymer, bevorzugt von 6,0 mol/kg bis 9,0 mol/kg Polymer, besonders bevorzugt von 6,5 mol/kg bis 9,0 mol/kg Polymer, ganz besonders bevorzugt von 7,0 mol/kg bis 9,0 mol/kg Polymer aufweist.

Die nach dem erfindungsgemäßen Verfahren hergestellten thermoplastischen Polyurethane können zu Formkörpern, insbesondere Extrusionsartikeln, Spritzgussartikeln, Folien, Thermoplastschäumen, oder Pulver verarbeitet werden.

Zur näheren Erläuterung der Erfindung dienen die nachfolgend erläuterten Abbildungen und Beispiele, wobei diese lediglich Anschauungsbeispiele für bestimmte Ausführungsformen darstellen, nicht jedoch eine Beschränkung des Umfangs der Erfindung. Es zeigen im Einzelnen:

**Abbildung 1**: Bevorzugte Ausführungsform eines Aufbaus zur Durchführung einer zweistufigen kontinuierlichen Herstellung eines erfindungsgemäßen thermoplastischen Polyurethans, durch Reaktionsfolge in einem temperierten Polymerisationsreaktor und Extruder.

**Abbildung 2**: Bevorzugte Ausführungsform eines Aufbaus zur Durchführung einer zweistufigen kontinuierlichen Herstellung eines erfindungsgemäßen thermoplastischen Polyurethans, durch Reaktionsfolge in einem Schleifenreaktor und Extruder.

**Beispiele**

Alle Prozentangaben beziehen sich, soweit nichts Anderslautendes vermerkt, auf das Gewicht.

**Verwendete Rohstoffe:**

1,6-Hexamethylendiisocyanat (HDI), 1,5-Pentamethylendiisocyanat (PDI), Isophorondiisocyanat (IPDI), 4,4'-Diisocyanatodicyclohexylmethan (H12MDI) und Xylylendiisocyanat (XDI) wurden von der Covestro AG bezogen.
1,4-Butandiol (BDO) wurde von der Firma Ashland bezogen. 1,3-Propandiol (PDO), 1,6-Hexandiol (HDO) und 1,4-Cyclohexandimethanol wurden von der Firma Sigma-Aldrich bezogen. Die Reinheit der Rohstoffe lag jeweils bei ≥ 99 %.

**Farbwerte**

Die Farbwerte im CIE-Lab Farbraum wurden mit einem Konica Minolta CM5 Spektralphotometer, mit der Lichtart D 65, bei 10° Beobachter gemäß DIN EN ISO 11664-1 (Juli 2011) bestimmt.

**Differential Scanning Calorimetrie (DSC)**

Der Schmelzpunkt wurde mittels DSC (Differential Scanning Calorimetrie) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

**Screening Differenz-Thermoanalyse (DTA)**

Die Enthalpiedaten wurden mittels einer Screening-DTA ermittelt in einem nach ISO 17025 akkreditierten Labor durchgeführt. Die Proben wurden in Glasampullen eingewogen, gasdicht versiegelt und im Messgerät mit 3 K/min von -50 °C bis +450 °C erwärmt. Mittels Thermoelementen wurde die Differenz zwischen der Probentemperatur und der Temperatur einer inerten Referenz (Aluminiumoxid) bestimmt. Die Einwaage lag bei 20 mg - 30 mg. Alle Messungen wurden nach DIN 51007 (Juni 1994) durchgeführt. Der Messfehler des Geräts liegt bei ± 2 %.

**Tabelle 1:** Experimentell, mittels DTA bestimmte Reaktionsenthalpien. Das molaren Verhältnis von Diisocyanat-Komponente zu Diol-Komponente beträgt bei den Bestimmungen 1,0 : 1,0.

| Diisocyanat | Diol | Energie [kJ/kg] |
|---|---|---|
| **Erfindungsgemäße Beispiele** | | |
| 1,6-Hexamethylendiisocyanat | 1,4-Butandiol | -690 |
| 1,6-Hexamethylendiisocyanat | 1,6-Hexandiol | -550 |
| 1,6-Hexamethylendiisocyanat: 1,4-Bis-(isocyanatomethyl)benzol 80:20 | 1,4-Butandiol | -595 |
| 1,6-Hexamethylendiisocyanat : Isophorondiisocyanat 80:20 | 1,4-Butandiol | -575 |
| 1,5-Pentamethylendiisocyanat | 1,4-Butandiol : 1,4-Cyclohexandimethanol 70 : 30 | -665 |
| **Vergleichsbeispiel** | | |
| 4,4'-Diphenylmethandiisocyanat | 1,4-Butandiol | -465 |

**Vergleichsbeispiel 1:**

In Gehäuse 1 eines Zweiwellenextruders (ZSK 53 der Fa. Werner&Pfleiderer) wurden 64,4 kg/h 1,6-Hexamethylendiisocyanat, erwärmt auf 105 °C, sowie eine Mischung aus 22,8 kg/h eines poly-THF-Diols (1000 g/mol, Fa. BASF) mit 32,9 kg/h 1,4-Butandiol, erwärmt auf 110 °C, dosiert. Die Drehzahl des Extruders lag bei 270 U/min. Die Verweilzeit im Extruder lag bei ca. 42 Sekunden. Am Ausgang des Extruders wurde die Schmelze durch ein Einlagen-Metallsieb mit einer Maschenweite von 200 Mikrometer filtriert, als Strang abgezogen, im Wasserbad gekühlt und granuliert.
Die Temperatur im Extruder stiegt trotz maximaler Kühlung in 7 von 12 Gehäusen auf Werte über 240 °C. Das erhaltene Produkt war durch die starke Erwärmung gelblich verfärbt und wies dunkelbraune bis schwarze Stippen auf und war damit kommerziell nicht verwendbar.

**Vergleichsbeispiel 2:**

In einem mit Stickstoff inertisierten 5l Druckkessel mit Ankerrührer, Bodenablass und Innenthermometer wurden 1,4-Butandiol (1,35 kg) unter Stickstoff (1 bar) vorgelegt und gerührt, bis eine Innentemperatur von 90 °C erreicht wurde. Über einen Zeitraum von 2 h wurde anschließend die Gesamtmenge an 1,6-Hexamethylendiisocyanat kontinuierlich in den Druckkessel dosiert (2,5 kg), während gleichzeitig die Reaktortemperatur kontinuierlich bis auf 190 °C erhöht wurde. Die Temperatur des Reaktionsgemischs lag aufgrund der freiwerdenden Reaktionswärme der Polyaddition über die gesamte Reaktionszeit bis zu 15 °C oberhalb der jeweiligen vorgegebenen Reaktortemperatur. Nach Beendigung der Zugabe von 1,6-Hexamethylendiisocyanat wurde noch weitere 10 Minuten bei 200 °C gerührt. Während dieser Zeit wurde ein Anstieg der Viskosität auf 106 Pa*s (Frequenz von 1 Hz, Rheometer: Anton Paar MCR-302; Messung nach ISO 6721-10 (September 2015)) detektiert. Dieser Anstieg der Viskosität führte zu einem Ausfall des Rührers. Aufgrund der hohen Viskosität war ein Austrag des Polymers aus dem Druckkessel nicht möglich.
Der Schmelzpunkt des Polymers beträgt 174,9 °C (DSC 2.Aufheizung nach Abkühlung mit 20 K/min).

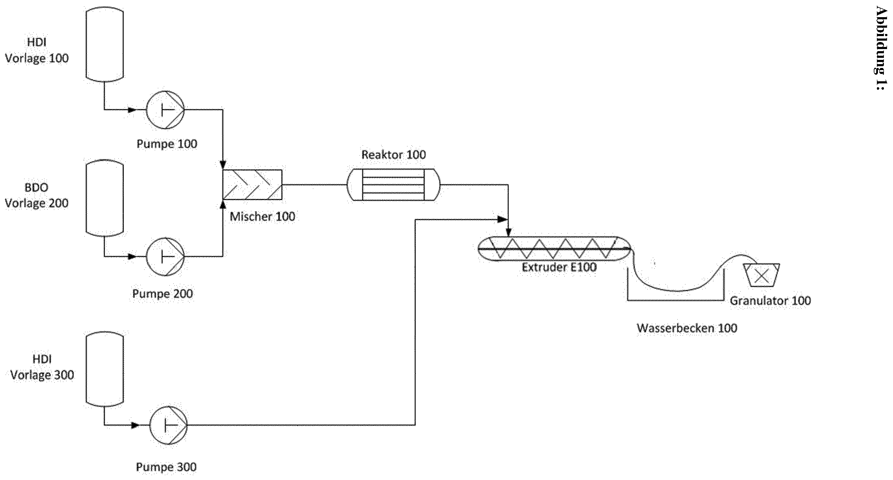

**Erfindungsgemäßes Beispiel 1 (Abbildung 1):**

Abbildung 1 zeigt schematisch den Aufbau zur Durchführung der zweistufigen kontinuierlichen Herstellung eines thermoplastischen Polyurethans.
Aus Vorlage 1 wurden 311,7 g/h 1,6-Hexamethylendiisocyanat mit der Pumpe 100 (Typ: SyrDos2 mit 10 mL Spritzen der Firma HiTec Zang) in den Mischer 100 gefördert. Zeitgleich wurden aus Vorlage 2 208,7 g/h 1,4-Butandiol mit der Pumpe 200 (Typ: SyrDos2 mit 10 mL Spritzen der Firma HiTec Zang) ebenfalls in den Mischer 100 gefördert. Bei Raumtemperatur wurden beide Stoffströme in den Mischer 100 gemischt. Als Mischer wurde ein Kaskadenmischer der Firma Ehrfeld Microtechnik BTS GmbH verwendet, der durch ein Heizband auf eine Temperatur von 200°C temperiert wurde. Am Austritt des Mischers hatte die Mischung eine Temperatur von 100°C. Die Mischung wurde anschließend in den bei 170 °C temperierten Reaktor 100 (Typ CSE-X/8G, Form G, Innendurchmesser = 12,3 mm, Länge = 500 mm der Firma Fluitec, Wärmeaustauschvermögen von 60 Kilowatt pro Kubikmeter und Kelvin) geleitet. Die Verweilzeit im Reaktor betrug 5 min. Das aus Reaktor 100 kontinuierlich austretende Prepolymer wurde durch eine auf 200 °C beheizte Rohrleitung in das zweite Gehäuse eines 2-Wellen Extruder (Miniextruder Process 11/Thermo Fisher) überführt. Der Extruder wurde über seine gesamte Länge auf 200 °C beheizt und die Drehzahl der Wellen betrugt 100 U/min. Anschließend wurden in Gehäuse 3 des Extruders 70,1 g/h 1,6-Hexamethylendiisocyanat mit der Pumpe 300 (Typ: SyrDos2 mit 10 mL Spritzen der Firma HiTec Zang) gefördert. Das entstandene milchig-weiße Produkt wurde durch die Extruderdüsen ausgetragen, als Strang abgezogen, in einem Wasserbad (25 °C) gekühlt und granuliert.
Die mittlere Verweilzeit über alle Verfahrensstufen betrug ca. 6 Minuten.
Die Temperatur des Heizmittels am Eingang des Reaktors 100 170 °C. Die Produkttemperatur am Ausgang des Reaktors 100 betrug 172 °C. Damit wurden 71 % der Gesamtreaktionsenthalpie in Reaktor 100 abgeführt.
Der Schmelzpunkt des hergestellten Polymers beträgt 182,9 °C (DSC 2. Aufheizung nach Abkühlung mit 20 K/min). Der L*-Wert beträgt 82,7, der b*-Wert beträgt 0,2.

**Erfindungsgemäßes Beispiel 2:**

In einem Versuchsaufbau wie in Beispiel 1 beschrieben wurden 311,7 g/h 1,6-Hexamethylendiisocyanat mit der Pumpe 100, 273,7 g/h 1,6-Hexandiol mit der Pumpe 200, sowie 70,1 g/h 1,6-Hexamethylendiisocyanat mit der Pumpe 300 dosiert und zur Reaktion gebracht. Die Temperatur am Eintritt in den Reaktor 100 betrug 50°C. Die Heizmitteltemperatur des Reaktors 100 betrug 170°C. Die Temperatur am Austritt betrug 176°C. Damit wurden 61 % der Gesamtreaktionsenthalpie im Reaktor 100 abgeführt.
Die mittlere Verweilzeit über alle Verfahrensstufen betrug ca. 6 Minuten. Der Schmelzpunkt des hergestellten Polymers beträgt 168,6 °C (DSC 2. Aufheizung nach Abkühlung mit 20 K/min).

**Erfindungsgemäßes Beispiel 3:**

In einem Versuchsaufbau wie in Beispiel 1 beschrieben wurden 311,7 g/h 1,6-Hexamethylendiisocyanat mit der Pumpe 100, 240,2 g/h 1,5-Pentandiol mit der Pumpe 200, sowie 73,9 g/h 1,6-Hexamethylendiisocyanat mit der Pumpe 300 dosiert und zur Reaktion gebracht. Die Temperatur am Eintritt in den Reaktor 100 betrug 100°C. Die Heizmitteltemperatur des Reaktors 100 betrug 155°C. Die Temperatur am Austritt betrug 160°C. Damit wurden 70% der Gesamtreaktionsenthalpie im Reaktor 100 abgeführt.

Die mittlere Verweilzeit über alle Verfahrensstufen betrug ca. 6 Minuten. Der Schmelzpunkt des hergestellten Polymers beträgt 152,7 °C (DSC 2. Aufheizung nach Abkühlung mit 20 K/min).

**Erfindungsgemäßes Beispiel 4:**

In einem Versuchsaufbau wie in Beispiel 1 beschrieben wurden 311,7 g/h 1,6-Hexamethylendiisocyanat mit der Pumpe 100, 176,1 g/h 1,3-Propandiol mit der Pumpe 200, sowie 73,9 g/h 1,6-Hexamethylendiisocyanat mit der Pumpe 300 dosiert und zur Reaktion gebracht. Die Temperatur am Eintritt in den Reaktor 100 betrug 162°C. Die Heizmitteltemperatur des Reaktors 100 betrug 165°C, die Temperatur am Austritt 168°C. Damit wurden 76% der Reaktionsenthalpie im Reaktor 100 abgeführt.

Die mittlere Verweilzeit über alle Verfahrensstufen betrug ca. 7 Minuten. Der Schmelzpunkt des hergestellten Polymers beträgt 161,8 °C (DSC 2. Aufheizung nach Abkühlung mit 20 K/min).

**Erfindungsgemäßes Beispiel 5:**

In einem Versuchsaufbau wie in Beispiel 1 beschrieben wurden 285,7 g/h 1,5-Pentamethylendiisocyanat mit der Pumpe 100, 176,2 g/h 1,3-Propandiol mit der Pumpe 200, sowie 64,3 g/h 1,5-Pentamethylendiisocyanat mit der Pumpe 300 dosiert und zur Reaktion gebracht.. Die Temperatur am Eintritt in den Reaktor 100 betrug 130°C. Die Heizmitteltemperatur des Reaktors 100 betrug 150°C, die Temperatur am Austritt 152°C. Damit wurden 78% der Reaktionsenthalpie im Reaktor 100 abgeführt.

Die mittlere Verweilzeit über alle Verfahrensstufen betrug ca. 7 Minuten. Der Schmelzpunkt des hergestellten Polymers beträgt 153,3 °C (DSC 2. Aufheizung nach Abkühlung mit 20 K/min).

**Erfindungsgemäßes Beispiel 6:**

In einem Versuchsaufbau wie in Beispiel 1 beschrieben wurden 285,7 g/h 1,5-Pentamethylendiisocyanat mit der Pumpe 100, 208,7 g/h 1,4-Butandiol mit der Pumpe 200, sowie 67,8 g/h 1,5-Pentamethylendiisocyanat mit der Pumpe 300 dosiert und zur Reaktion gebracht.

Die Temperatur am Eintritt in den Reaktor 100 betrug 30°C. Die Heizmitteltemperatur des Reaktors 100 betrug 176°C, die Temperatur am Austritt 180°C. Damit wurden 78% der Reaktionsenthalpie im Reaktor 100 abgeführt. Damit wurden 61% der Reaktionsenthalpie im Reaktor 100 abgeführt.

Die mittlere Verweilzeit über alle Verfahrensstufen betrug ca. 7 Minuten. Der Schmelzpunkt des hergestellten Polymers beträgt 160,9 °C (DSC 2. Aufheizung nach Abkühlung mit 20 K/min). Der L*-Wert beträgt 81,5, der b*-Wert beträgt 0,7.

**Erfindungsgemäßes Beispiel 7:**

In einem Versuchsaufbau wie in Beispiel 1 beschrieben wurden 311,7 g/h 1,6-Hexamethylendiisocyanat mit der Pumpe 100, 192,5 g/h einer Mischung von 1,4-Butandiol und 1,3 Propandiol (1:1 Stoffmenge) mit der Pumpe 200, sowie 70,1 g/h 1,6-Hexamethylendiisocyanat mit der Pumpe 300 dosiert und zur Reaktion gebracht. Die Temperatur am Eintritt in den Reaktor 100 betrug 90°C. Die Heizmitteltemperatur des Reaktors 100 betrug 135°C, die Temperatur am Austritt 140°C. Damit wurden 75% der Reaktionsenthalpie im Reaktor 100 abgeführt.

Die mittlere Verweilzeit über alle Verfahrensstufen betrug ca. 7 Minuten. Der Schmelzpunkt des hergestellten Polymers beträgt 137,0 °C (DSC 2. Aufheizung nach Abkühlung mit 20 K/min).

**Erfindungsgemäßes Beispiel 8:**

In einem Versuchsaufbau wie in Beispiel 1 beschrieben wurden 305,5 g/h 1,5-Pentamethylendiisocyanat mit der Pumpe 100, 259,1 g/h einer Mischung von 1,4-Butandiol und 1,4-Cyclohexandimethanol (7:3 Stoffmenge) mit der Pumpe 200, sowie 68,4 g/h 1,5-Pentamethylendiisocyanat mit der Pumpe 300 dosiert und zur Reaktion gebracht. Die Temperatur am Eintritt in den Reaktor 100 betrug 60°C. Die Heizmitteltemperatur des Reaktors 100 betrug 175°C, die Temperatur am Austritt 180°C. Damit wurden 64% der Reaktionsenthalpie im Reaktor 100 abgeführt.

Die mittlere Verweilzeit über alle Verfahrensstufen betrug ca. 6 Minuten. Der Schmelzpunkt des hergestellten Polymers beträgt 166,1 °C (DSC 2. Aufheizung nach Abkühlung mit 20 K/min).

**Erfindungsgemäßes Beispiel 9:**

In einem Versuchsaufbau wie in Beispiel 1 beschrieben wurden 310,0 g/h einer Mischung von 1,6-Hexamethylendiisocyanat und m-Xylylendiisocyanat (8:2 Stoffmenge) mit der Pumpe 100, 208,1 g/h 1,4-Butandiol mit der Pumpe 200, sowie 83,9 g/h einer Mischung von 1,6-Hexamethylendiisocyanat und m-Xylylendiisocyanat (8:2 Stoffmenge) mit der Pumpe 300 dosiert und zur Reaktion gebracht. Die Temperatur am Eintritt in den Reaktor 100 betrug 40°C. Die Heiztmitteltemperatur des Reaktors 100 betrug 176°C, die Temperatur am Austritt 180°C. Damit wurden 61% der Reaktionsenthalpie im Reaktor 100 abgeführt.

Die mittlere Verweilzeit über alle Verfahrensstufen betrug ca. 7 Minuten. Der Schmelzpunkt des hergestellten Polymers beträgt 163,6 °C (DSC 2. Aufheizung nach Abkühlung mit 20 K/min).

**Erfindungsgemäßes Beispiel 10:**

In einem Versuchsaufbau wie in Beispiel 1 beschrieben wurden 313,3 g/h einer Mischung von 1,6-Hexamethylendiisocyanat und Isophorondiisocyanat (8:2 Stoffmenge) mit der Pumpe 100, 208,1 g/h 1,4-Butandiol mit der Pumpe 200, sowie 96,1 g/h einer Mischung von 1,6-Hexamethylendiisocyanat und Isophorondiisocyanat (8:2 Stoffmenge) mit der Pumpe 300 dosiert und zur Reaktion gebracht. Die Temperatur am Eintritt in den Reaktor 100 betrug 40°C. Die Heiztmitteltemperatur des Reaktors 100 betrug 174°C, die Temperatur am Austritt 180°C. Damit wurden 61% der Reaktionsenthalpie im Reaktor 100 abgeführt.

Die mittlere Verweilzeit über alle Verfahrensstufen betrug ca. 6 Minuten. Der Schmelzpunkt des hergestellten Polymers beträgt 163,7 °C (DSC 2. Aufheizung nach Abkühlung mit 20 K/min).

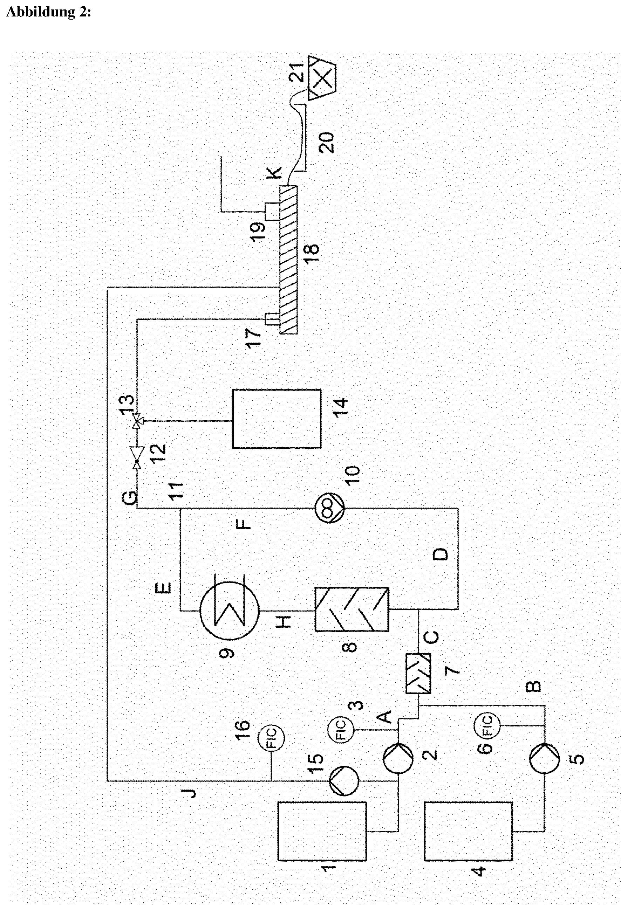

**Erfindungsgemäßes Beispiel 11 (Abbildung 2):**

Aus einer 250 - Liter - Vorlage für 1,6-Hexamethylendiisocyanat 1 wurde mit Hilfe einer Zahnringpumpe 2 (Firma HNP, MZR 7255) ein 1,6-Hexamethylendiisocyanat -Strom A zu einem Statikmischer 7 gefördert. Der Durchsatz des 1,6-Hexamethylendiisocyanat -Stroms A wurde mittels eines Massedurchflussmessers 3 (Firma Bronkhorst, Mini Cori-Flow M1X, max. Durchfluss 12 kg/h) gemessen und auf einen Wert von 2,911 kg/h eingeregelt. Aus einer 250 - Liter - Vorlage für 1,4-Butandiol 4 wurde mit Hilfe einer Zahnringpumpe 5 (Firma HNP, MZR 7205) ein 1,4-Butandiol-Strom B zum Statikmischer 7 gefördert. Der Durchsatz des 1,4-Butandiol-Stroms wurde mittels eines Massedurchflussmessers 6 (Firma Bronkhorst, Mini Cori-Flow M1X, max. Durchfluss 8 kg/h) gemessen und auf einen Wert von 2,000 kg/h eingeregelt. Die Temperatur des 1,6-Hexamethylendiisocyanats betrug dabei Umgebungstemperatur, ca. 25 °C. Die Temperatur des 1,4-Butandiols betrug 40 °C. In dem Statikmischer 7 (Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.

Der gemischte und dispergierte Strom C wurde in einem Umlauf mit einem umlaufenden Polymerstrom D in einem Statikmischer 8 (Statikmischer äquivalent zu Sulzer SMX, Innendurchmesser 34 mm, L/D=20) zu einem Strom H gemischt. Die Temperatur des Stromes D betrug 182 °C.

Der gemischte und teilweise schon reagierte Strom H wurde in einen temperierbaren statischen Mischer 9 geführt. Dort läuft die Reaktion zum großen Teil ab und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmetern. Er war mit Wärmeträgeröl beheizt/gekühlt. Die Heiztmitteltemperatur am Eintritt betrug 180 °C.

Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3) hatte ein Volumen pro Umdrehung von 25,6 Kubikzentimeter und eine Drehzahl von 50 pro Minute.

Die ganze Umlauf war vollgefüllt, und das Polymer zum großen Teil inkompressibel. Daher war der Massenstrom des Stroms G identisch mit dem des Stroms C. Der Strom G bestand aus Oligomer.

Der ganze Umlauf bestand aus doppelwandig ausgeführten Rohrleitungen und Apparaten, die mit Thermoöl beheizt waren. Die Heiztmitteltemperatur betrug 182 °C.

Nach dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 200-Liter-Metallfass mit Absaugung, gefahren werden. Im regulären Betrieb wurde der Strom G auf einen Extruder 18 geleitet.

Aus der 1,6-Hexamethylendiisocyanat-Vorlage 1 wurde mit Hilfe einer Mikrozahnringpumpe 15 (MZR 6355 der Firma HNP) ein 1,6-Hexamethylendiisocyanat-Strom J entnommen. Der Durchsatz des 1,6-Hexamethylendiisocyanat-Stroms J wurde mittels eines Massedurchflussmessers 16 (Firma Bronkhorst, Mini Cori-Flow, M1X, maximaler Durchfluss 2 kg/h) gemessen und auf 0,784 Kilogramm pro Stunde eingeregelt. Die Temperatur des 1,6-Hexamethylendiisocyanat-Stroms J betrug ebenfalls Raumtemperatur, etwa 25 °C. Dieser Strom wurde ebenfalls auf den Extruder 18 geleitet.

Der Extruder 18 war eine ZSK 26 MC der Firma Coperion, der bei Temperaturen von 200 °C und einer Drehzahl von 66 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der 1,6-Hexamethylendiisocyanat-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 200 mbar unter Umgebungsdruck. Der Polymerstrom K wurde durch zwei Düsen ausgepresst, in einem mit VE-Wasser gefüllten Wasserbad abgekühlt und durch einen Granulator 21 zu Granulat zerschnitten.

Die mittlere Verweilzeit über alle Verfahrensstufen betrug 51 Minuten. Der Schmelzpunkt des Polymers beträgt 185,2 °C (DSC 2.Aufheizung nach Abkühlung mit 20 K/min).

58% der gesamten Reaktionsenhalpie wurde in dem temperierbren statischen Mischer 9 abgeführt.

**Erfindungsgemäßes Beispiel 12 (Abbildung 2):**

In einem Versuchsaufbau wie in Beispiel 11 beschrieben wurden diesmal aus Vorlage 1 2,711 kg/h 1,5-Pentamethylendiisocyanat (Strom A), sowie aus Vorlage 4 2,000 kg/h 1,4-Butandiol (Strom B) in den Statikmischer 7 gefördert. Der Durchsatz des 1,5-Pentamethylendiisocyanat-Stroms J wurde auf 0,677 Kilogramm pro Stunde eingeregelt.

Die Temperaturen der Rohstoffe und die Temperaturen der anderen Stoffströme sowie der Anlagenteile und Heizmittel entsprachen denen wie in Beispiel 11 beschrieben. Auch die Drehzahl des Extruders und die Drücke der Entgasungen entsprachen denen in Beispiel 11. Die Heiztemperaturen betrugen 165°C.

Die mittlere Verweilzeit über alle Verfahrensstufen betrug 53 Minuten. Der Schmelzpunkt des hergestellten Polymers beträgt 159,0 °C (DSC 2. Aufheizung nach Abkühlung mit 20 K/min). 62% der gesamten Reaktionsenhalpie wurde in dem temperierbren statischen Mischer 9 abgeführt.

**Patentansprüche**

1. Kontinuierliches lösungsmittelfreies mehrstufiges Verfahren zur Herstellung von thermoplastischen Polyurethanen durch Umsetzung der Komponenten

   A) ein oder mehrere Diole,
   B) ein oder mehrere Diisocyanate, umfassend aliphatische, cycloaliphatische und / oder araliphatische Diisocyanate,
   C) gegebenenfalls einem oder mehreren Katalysatoren, und
   D) gegebenenfalls weiterer Hilfs- oder Zusatzstoffe,

   wobei mindestens ein Diol der Komponente A ein Molekulargewicht von 62 g/mol bis 250 g/mol aufweist, wobei in mindestens einer Verfahrensstufe des mehrstufigen Verfahrens mindestens ein Hydroxy-terminiertes Prepolymer aus der Gesamtmenge oder einer ersten Teilmenge der Komponente A und einer ersten Teilmenge der Komponente B gebildet wird, wobei die Summe aller Teilmengen der Komponente A bzw. die Summe aller Teilmengen der Komponente B über alle Verfahrensstufen des Mehrstufenverfahrens zusammen die Gesamtmenge der eingesetzten Komponente A bzw. Komponente B ist, **dadurch gekennzeichnet, dass** die Komponenten A und B so ausgewählt werden, dass wenn man sie in einem molaren Verhältnis von 1,0 : 1,0 umsetzt die Gesamtreaktionsenthalpie über alle Verfahrensstufen von -900 kJ/kg bis -500 kJ/kg beträgt, bestimmt gemäß DIN 51007:1994-06.

2. Kontinuierliches lösungsmittelfreies mehrstufiges Verfahren nach Anspruch 1, **dadurch gekennzeichnet, dass** in mindestens einer Verfahrensstufe ein Teil der entstehenden Gesamtreaktionsenthalpie, vorzugsweise von 25 % bis 98 % der Gesamtreaktionsenthalpie abgeführt wird.

3. Kontinuierliches lösungsmittelfreies mehrstufiges Verfahren nach einem der vorhergehenden Ansprüche, **dadurch**

**gekennzeichnet, dass** die Gesamtreaktionsenthalpie über alle Verfahrensstufen im Bereich von -900 kJ/kg bis -550 kJ/kg, vorzugsweise im Bereich von -900 kJ/kg bis -580 kJ/kg, bevorzugter im Bereich von -900 kJ/kg bis -600 kJ/kg, noch bevorzugter im Bereich von -900 kJ/kg bis -650 kJ/kg ist.

4. Kontinuierliches lösungsmittelfreies mehrstufiges Verfahren nach einem der vorhergehenden Ansprüche, **dadurch gekennzeichnet, dass** insgesamt ein molares Verhältnis von Komponente A zu Komponente B von 1,0 : 0,95 bis 0,95 : 1,0 vorliegt.

5. Kontinuierliches lösungsmittelfreies mehrstufiges Verfahren nach einem der vorhergehenden Ansprüche, **dadurch gekennzeichnet, dass** das mindestens eine Hydroxy-terminierte Prepolymer in mindestens einer Verfahrensstufe aus der Gesamtmenge der Komponente A und einer ersten Teilmenge der Komponente B gebildet wird, vorzugsweise wobei die erste Teilmenge der Komponente B von 40 % bis 95 %, bevorzugt von 60 % bis 95 %, bevorzugter von 75 % bis 93 % beträgt jeweils bezogen auf die molare Gesamtmenge der im Verfahren eingesetzten Komponente B.

6. Kontinuierliches lösungsmittelfreies mehrstufiges Verfahren nach einem der vorhergehenden Ansprüche, **dadurch gekennzeichnet, dass** das mindestens eine Hydroxy-terminierte Prepolymer in mindestens einer Verfahrensstufe aus einer ersten Teilmenge der Komponente A und einer ersten Teilmenge der Komponente B gebildet wird, wobei das molare Verhältnis der eingesetzten Teilmengen von Komponente B zu Komponente A von 0,65 : 1,0 bis 0,98 : 1,0, vorzugsweise von 0,70 : 1,0 bis 0,97 : 1,0, bevorzugter von 0,75 : 1,0 bis 0,96 : 1,0 und ganz besonders bevorzugt 0,75 : 1,0 bis 0,95 : 1,0 beträgt und wobei als erste Teilmenge A mindestens 50 %, vorzugsweise 70 % noch bevorzugter 90 % bezogen auf die molare Gesamtmenge der im Verfahren eingesetzten Komponente A eingesetzt wird.

7. Kontinuierliches lösungsmittelfreies mehrstufiges Verfahren nach einem der vorhergehenden Ansprüche, **dadurch gekennzeichnet, dass** in mindestens einer weiteren auf die Bildung des mindestens einen Hydroxy-terminierten Prepolymers folgenden Verfahrensstufe, das mindestens eine Hydroxy-terminierte Prepolymer mit einer weiteren Teilmenge der Komponente B zum thermoplastischen Polyurethan umgesetzt wird, vorzugsweise wobei die weitere Teilmenge der Komponente B von 5 % bis 60 %, bevorzugt von 5 % bis 40 %, bevorzugter von 7 % bis 25 % beträgt jeweils bezogen auf die molare Gesamtmenge der im Verfahren eingesetzten Komponente B, mit der Maßgabe, dass die Summe aller Teilmengen der Komponente B über alle Verfahrensstufen des Mehrstufenverfahrens zusammen die molare Gesamtmenge der eingesetzten Komponente B ist.

8. Kontinuierliches lösungsmittelfreies mehrstufiges Verfahren nach einem der Ansprüche 1-4, **dadurch gekennzeichnet, dass** das mindestens eine Hydroxy-terminierte Prepolymer in mindestens einer Verfahrensstufe aus einer ersten Teilmenge der Komponente A und einer ersten Teilmenge der Komponente B gebildet wird, und in mindestens einer weiteren auf die Bildung des Hydroxy-terminierten Prepolymers folgenden Verfahrensstufe das mindestens eine Hydroxy-terminierte Prepolymer mit mindestens einem NCO-terminierten Prepolymer zum thermoplastischen Polyurethan umgesetzt wird, wobei das mindestens eine NCO-terminierte Prepolymer in mindestens einer weiteren Verfahrensstufe aus einer zweiten Teilmenge der Komponente A und einer zweiten Teilmenge der Komponente B gebildet wird.

9. Kontinuierliches lösungsmittelfreies mehrstufiges Verfahren nach einem der vorhergehenden Ansprüche, **dadurch gekennzeichnet, dass** als Komponente B ein oder mehrere aliphatische oder cycloaliphatische Diisocyanate eingesetzt werden, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI) und / oder Mischungen aus mindestens 2 hieraus.

10. Kontinuierliches lösungsmittelfreies mehrstufiges Verfahren nach einem der vorhergehenden Ansprüche, **dadurch gekennzeichnet, dass** als Komponente B ein oder mehrere aliphatische Diisocyanate eingesetzt werden, vorzugsweise 1,4-Diisocyanatobutan (BDI), 1,5-Diisocyanatopentan (PDI), 1,6-Diisocyanatohexan (HDI) und 2-Methyl-1,5-diisocyanatopentan und / oder Mischungen aus mindestens 2 hieraus.

11. Kontinuierliches lösungsmittelfreies mehrstufiges Verfahren nach einem der vorhergehenden Ansprüche, **dadurch gekennzeichnet, dass** 90 mol% bis 100 mol% der Diole, bevorzugt 95 mol% bis 100 mol% der Diole, besonders bevorzugt 98 mol% bis100 mol% der Diole, noch bevorzugter 99 mol% bis 100 mol% der Diole der Komponente A ein Molekulargewicht von 62 g/mol bis 250 g/mol aufweisen und am bevorzugtesten, dass die ein oder mehreren Diole der Komponente A alle ein Molekulargewicht von 62 g/mol bis 250 g/mol aufweisen.

12. Kontinuierliches lösungsmittelfreies mehrstufiges Verfahren nach einem der vorhergehenden Ansprüche, **dadurch gekennzeichnet, dass** als Komponente A ein oder mehrere aliphatische, cycloaliphatische und / oder araliphatische Diole, vorzugsweise ein oder mehrere aliphatische oder cycloaliphatische Diole, besonders bevorzugt ein oder mehrere aliphatische Diole mit einem Molekulargewicht von 62 g/mol bis 250 g/mol eingesetzt werden noch bevorzugter ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, und / oder Mischungen aus mindestens 2 hieraus.

13. Kontinuierliches lösungsmittelfreies mehrstufiges Verfahren nach einem der vorhergehenden Ansprüche, **dadurch gekennzeichnet, dass** das mindestens eine Hydroxy-terminierte Prepolymer durch Polyaddition von mindestens einer Kombinationen aus Komponente A und Komponente B gebildet wird ausgewählt aus der Gruppe bestehend aus 1,4-Diisocyanatobutan mit 1,2-Ethandiol, 1,4-Diisocyanatobutan mit 1,2- und / oder 1,3-Propandiol, 1,4-Diisocyanatobutan mit 1,2-, 1,3- und / oder 1,4-Butandiol, 1,4-Diisocyanatobutan mit 1,5-Pentandiol, 1,4-Diisocyanatobutan mit 1,6-Hexandiol, 1,4-Diisocyanatobutan mit 1,7-Heptandiol, 1,4-Diisocyanatobutan mit 1,8-Octandiol, 1,4-Diisocyanatobutan mit 1,9-Nonandiol, 1,4-Diisocyanatobutan mit 1,10-Decandiol, 1,4-Diisocyanatobutan mit 1,3-Cyclobutandiol, 1,4-Diisocyanatobutan mit 1,3-Cyclopentandiol, 1,4-Diisocyanatobutan mit 1,2-, 1,3- und 1,4-Cyclohexandiol und / oder Mischungen aus mindestens 2 Isomeren, 1,4-Diisocyanatobutan mit 1,4-Cyclohexandimethanol, 1,5-Diisocyanatopentan mit 1,2-Ethandiol, 1,5-Diisocyanatopentan mit 1,2- und / oder 1,3-Propandiol, 1,5-Diisocyanatopentan mit 1,2-, 1,3- und / oder 1,4-Butandiol, 1,5-Diisocyanatopentan mit 1,5-Pentandiol, 1,5-Diisocyanatopentan mit 1,6-Hexandiol, 1,5-Diisocyanatopentan mit 1,7-Heptandiol, 1,5-Diisocyanatopentan mit 1,8-Octandiol, 1,5-Diisocyanatopentan mit 1,3-Cyclobutandiol, 1,5-Diisocyanatopentan mit 1,3-Cyclopentandiol, 1,5-Diisocyanatopentan mit 1,2-, 1,3- und 1,4-Cyclohexandiol und / oder Mischungen aus mindestens 2 Isomeren, 1,5-Diisocyanatopentan mit 1,4-Cyclohexandimethanol, 1,6-Diisocyanatohexan mit 1,2-Ethandiol, 1,6-Diisocyanatohexan mit 1,2- und / oder 1,3-Propandiol, 1,6-Diisocyanatohexan mit 1,2-, 1,3- und / oder 1,4-Butandiol, 1,6-Diisocyanatohexan mit 1,5-Pentandiol, 1,6-Diisocyanatohexan mit 1,6-Hexandiol, 1,6-Diisocyanatohexan mit 1,7-Heptandiol, 1-Isocyanato-3,3,5-trimethyl-5-isocyanatomethyl-cyclohexan mit 1,2-Ethandiol und 1-Isocyanato-3,3,5-trimethyl-5-isocyanatomethyl-cyclohexan mit 1,2- und / oder 1,3-Propandiol.

14. Kontinuierliches lösungsmittelfreies mehrstufiges Verfahren nach einem der vorhergehenden Ansprüche, **dadurch gekennzeichnet, dass** die mittlere Verweilzeit über alle Verfahrensstufen zwischen 10 Sekunden und 110 Minuten beträgt.

15. Kontinuierliches lösungsmittelfreies mehrstufiges Verfahren nach einem der vorhergehenden Ansprüche, **dadurch gekennzeichnet, dass** ein Gesamtdurchsatz an Polyurethanpolymer von mindestens 0,5 kg/h, bevorzugt von 2 kg/h, besonders bevorzugt von mindestens 100 kg/h und ganz besonders bevorzugt von mindestens 1000 kg/h erreicht wird.

16. Kontinuierliches lösungsmittelfreies mehrstufiges Verfahren nach einem der vorhergehenden Ansprüche, wobei das Verfahren die folgenden Schritte umfasst:

i) kontinuierliches Vermischen der Gesamtmenge oder einer ersten Teilmenge der Komponente A mit einer ersten Teilmenge der Komponente B und gegebenenfalls der Komponenten C und / oder D,
ii) kontinuierliches Reagieren lassen der Mischung aus Schritt i) in mindestens einer ersten Verfahrensstufe unter Bildung des mindestens einen Hydroxy-terminierten Prepolymers, wobei die Temperatur der Reaktionsmischung in der mindestens einen ersten Verfahrensstufe unterhalb der Zersetzungstemperatur des mindestens einen Hydroxy-terminierten Prepolymers gehalten wird,
iii) kontinuierliches Überführen des in Schritt ii) gebildeten mindestens einen Hydroxy-terminierten Prepolymers in eine zweite Verfahrensstufe, wobei die zweite Verfahrensstufe durch mindestens eine Stofftransportleitung mit der ersten Verfahrensstufe verbunden ist,
iv) gegebenenfalls kontinuierliches Vermischen und Reagieren lassen der verbleibenden Teilmengen der Komponenten A und B in einer dritten Verfahrensstufe, um mindestens ein NCO-terminiertes Prepolymer herzustellen, wobei die Temperatur der Reaktionsmischung in der dritten Verfahrensstufe unterhalb der Zersetzungstemperatur des mindestens einen NCO-terminierten Prepolymers gehalten wird, wobei die dritte Verfahrensstufe mit der ersten und / oder zweiten Verfahrensstufe über mindestens eine Stofftransportleitung verbunden ist,

v) kontinuierliches Vermischen des mindestens einen Hydroxy-terminierten Prepolymers mit der verbleibenden Teilmenge der Komponente B und gegebenenfalls mit der verbleibenden Teilmenge der Komponente A und / oder dem mindestens einen NCO-terminierten Prepolymer aus Schritt iv),

vi) kontinuierliches Reagieren lassen der Mischung aus Schritt v) unter Erhalt des thermoplastischen Polyurethans, wobei die Temperatur der Reaktionsmischung in der Verfahrensstufe unterhalb der Zersetzungstemperatur des thermoplastischen Polyurethans gehalten wird,

vii) kontinuierliches Abkühlen und Granulieren des thermoplastischen Polyurethans.

17. Thermoplastisches Polyurethan erhältlich aus dem kontinuierlichen lösungsmittelfreien mehrstufigen Verfahren nach einem der vorhergehenden Ansprüche.

**Abbildung 1:**

**Abbildung 2:**

Europäisches
Patentamt

European
Patent Office

Office européen
des brevets

**EUROPÄISCHER RECHERCHENBERICHT**

**Nummer der Anmeldung**

EP 19 21 6835

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 135 111 A2 (BAYER AG [DE]) 27. März 1985 (1985-03-27) * Seite 31 - Seite 34 * * Method II. * ----- | 1-17 | INV. C08G18/08 C08G18/10 C08G18/32 C08G18/73 |
| X | EP 0 900 812 A1 (BAYER AG [DE]) 10. März 1999 (1999-03-10) * Absatz [0017] * * Absatz [0020] * * Beispiele 1-6 * ----- | 1-17 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 24. Juni 2020 | Sütterlin, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 21 6835

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2020

| Im Recherchenbericht angeführtes Patentdokument | Datum der Veröffentlichung | Mitglied(er) der Patentfamilie | Datum der Veröffentlichung |
|---|---|---|---|
| EP 0135111 A2 | 27-03-1985 | DE 3329775 A1 | 28-02-1985 |
| | | EP 0135111 A2 | 27-03-1985 |
| | | JP S6060125 A | 06-04-1985 |
| | | US 4521582 A | 04-06-1985 |
| EP 0900812 A1 | 10-03-1999 | CA 2246166 A1 | 03-03-1999 |
| | | DE 19738498 A1 | 04-03-1999 |
| | | EP 0900812 A1 | 10-03-1999 |
| | | JP 4162301 B2 | 08-10-2008 |
| | | JP H11181043 A | 06-07-1999 |
| | | KR 19990029443 A | 26-04-1999 |
| | | TW 499443 B | 21-08-2002 |
| | | US 6294637 B1 | 25-09-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2284637 A
- US 3038884 A
- DE 728981
- US 2511544 A
- US 5627254 A
- DE 2901774 A


**In der Beschreibung aufgeführte Nicht-Patentliteratur**

- **O. BAYER.** *Angew. Chem.,* 1947, vol. 59, 257-288
- Reactor Types and Their Industrial Applications. **MORAN, S. ; HENKEL, K.-D.** Ullmann's Encyclopedia of Industrial Chemistry. 2016, vol. 149
- Makromolekulare Stoffe. HOUBEN-WEYL "Methoden der organischen Chemie. Georg Thieme Verlag, 1987, vol. E20, 1587-1593
- *Justus Liebigs Annalen der Chemie,* 1949, vol. 562, 75-136
- High Polymers. **J.H. SAUNDERS ; K.C. FRISCH.** Monographie. Verlag Interscience Publishers, 1962, vol. XVI
- **R. GÄCHTER ; U. H. MÜLLER.** Taschenbuch für Kunststoff-Additive. Hanser Verlag, 1990